# EUROPEAN PATENT SPECIFICATION

(11) **EP 4 086 298 B1**
(45) Date of publication and mention of the grant of the patent: **02.09.2026**
(21) Application number: 20938631.7
(22) Date of filing: 03.06.2020
(51) Int. Cl.: C08H 99/00, C09D 11/08, C09D 11/101, C08F 2/48, C08F 283/01, C09D 11/03, C09D 11/037, C09D 11/108, C08F 2/50, C08L 93/04

(54) **ACTIVE ENERGY RAY-CURABLE LITHOGRAPHIC PRINTING INK, AND PRINTED MATTER**
AKTIVENERGIESTRAHLENHÄRTBARE LITHOGRAFISCHE DRUCKFARBE UND BEDRUCKTES MATERIAL
ENCRE D'IMPRESSION LITHOGRAPHIQUE DURCISSABLE PAR RAYONNEMENT D'ÉNERGIE ACTIVE ET MATIÈRE IMPRIMÉE

(43) Date of publication of application: 09.11.2022
(73) Proprietor: artience Co., Ltd., Tokyo (JP); Toyo Ink Co., Ltd., Tokyo 104-8378 (JP)
(72) Inventor: NONAMI, Hirotada, Tokyo 104-8378 (JP); FUKUSHIMA, Akeha, Tokyo 104-8378 (JP); HANADA, Tomohiro, Tokyo 104-8378 (JP); NISHIMURA, Yoshie, Tokyo 104-8378 (JP); OHNO, Takamoto, Tokyo 104-8378 (JP); KUGE, Hiroyuki, Tokyo 104-8378 (JP)
(74) Representative: SSM Sandmair
(86) International application number: PCT/JP2020/021970
(87) International publication number: WO 2021/245846

(56) References cited:
- EP-A1- 3 434 711
- WO-A1-2015/125867
- JP-A- 2002 363 446
- JP-A- 2010 106 191
- JP-A- 2017 043 743
- JP-A- 2018 051 473
- JP-A- 2018 150 469
- JP-A- 2020 019 915
- JP-A- 2020 066 649
- JP-A- H1 192 690
- JP-B2- 5 286 859

## Description

### TECHNICAL FIELD

The present invention relates to an active energy ray-curable lithographic printing ink and printed matter.

### BACKGROUND ART

In lithographic printing, inks having a comparatively high viscosity of 5 to 120 Pa·s are typically used. Further, in the mechanism of a printing press used in lithographic printing, ink is supplied from an ink fountain, passes through a plurality of rollers, and is supplied to the printing area of the printing plate to form a pattern, and the ink on the printing plate is then transferred to a substrate such as paper to form an image. In lithographic printing that uses dampening water during pattern formation, the dampening water is supplied to the non-printing area, so that the non-printing area repels the ink. On the other hand, in waterless lithographic printing that does not use dampening water during pattern formation, a silicone layer is formed in the non-printing area, so that the non-printing area repels the ink.

Particularly in the case of lithographic printing that uses dampening water during pattern formation, the emulsification balance between the ink and the dampening water is very important. As a result, it is desirable that inks used in lithographic printing have a suitable viscosity, as well as suitable emulsifiability and high-speed printability. If the amount of ink emulsification is too great, then inking of the non-printing area becomes increasingly likely, and smudges tend to occur more easily. On the other hand, if the amount of ink emulsification is too little, then when an image having little pattern is printed, there is an increased chance of the dampening water squirting onto the inked surface. As a result, the ink transferability between rollers and the ink transferability to the substrate tend to deteriorate, meaning stable printing becomes difficult.

Moreover, in recent years there have been growing demands for reduced staffing levels during printing, improved labor saving and automation, and increased printing speeds, and printing speeds in particular have become progressively faster. Accordingly, inks that can be used under various printing conditions to obtain high-quality printed matter in a stable manner over long periods without any troubles are very desirable, and various ink improvements have already been investigated.

Against this background, active energy ray-curable lithographic printing inks have become well known. An active energy ray-curable lithographic printing ink contains a compound that exhibits curability upon irradiation with active energy rays (hereafter referred to as an active energy ray-curable compound), such as an acrylic ester compound. Accordingly, when the ink is irradiated with active energy rays, the ink cures instantly, forming a tough coating film resulting from three dimensional crosslinking of the active energy ray-curable compound. Further, because the ink cures instantly, post-processing can be performed immediately after printing. Due to these advantages, active energy ray-curable lithographic printing inks can be used favorably in packaging printing and form printing in commercial fields, which require a tough coating film in order to improve productivity and ensure good protection of the printed design.

An active energy ray-curable lithographic printing ink (hereafter sometimes referred to as simply "the ink") generally requires favorable printability including good emulsifiability, scumming resistance, and initial density stability. Further, in addition to this printability, the ink also requires favorable printed coating film applicability properties such as curability, glossiness and adhesiveness, as well as favorable printed coating film strength including abrasion resistance and solvent resistance.

A representative active energy ray-curable lithographic printing ink contains a binder and a pigment as solid components, wherein the binder refers to the component that forms the coating film. The binder contains a resin component (also referred to as a binder resin) containing a resin and an active energy ray-curable compound such as an acrylic ester compound, a radical polymerization initiator, and various additives as required. In order to satisfy the above requirements, up until now, unsaturated polyester resins, epoxy acrylate resins, urethane acrylate resins, and polyester acrylate resins have been investigated as potential binder resins for active energy ray-curable lithographic printing inks.

For example, Patent Document 1 discloses a resin obtained by modifying an unsaturated polyester with an isocyanate group-containing urethane acrylate. However, because the disclosed binder resin has a structure of high linearity, when an ink is produced using this resin, achieving adequate ink viscoelasticity is difficult. Further, printability properties such as misting resistance and scumming resistance tend to deteriorate.

Further, Patent Document 2 discloses a binder resin obtained by reacting a polyester compound having excess hydroxyl groups and containing a rosin derivative polycarboxylic acid as an essential component with acrylic acid or methacrylic acid. However, the specification of the rosin derivative polycarboxylic acid is inadequate, and for example, when the amount of residual conjugated double bonds in the binder resin is large, curing inhibition caused by oxygen in the air tends to be readily induced. As a result, when an ink is produced using this resin, the ink tends to suffer from problems of curability, as well as unsatisfactory printed coating film strength.

Moreover, Patent Document 3 discloses, as a binder resin, a polyester resin containing a polycarboxylic acid, the resin obtained by an addition reaction between a rosin acid and an α,β-unsaturated carboxylic acid. However, when an ink is produced using the disclosed binder resin, the ink tends to suffer from unsatisfactory fluidity and glossiness.

Furthermore, Patent Document 4 discloses a photocurable resin composition for a lithographic printing ink containing a diallyl phthalate resin and a polyfunctional acrylate-based compound as a binder resin. However, in this photocurable resin composition (ink), if the amount of the diallyl phthalate resin relative to the total mass of the ink is increased, then the ink viscosity tends to become overly high, and the fluidity and glossiness tend to be unsatisfactory.

Patent Document 5 discloses a rosin-modified resin having a structural unit derived from a compound obtained by addition of an α,β-unsaturated carboxylic acid or acid anhydride thereof to a conjugated rosin acid, a structural unit derived from an organic monobasic acid excluding the conjugated rosin acid, a structural unit derived from an aliphatic polybasic acid anhydride, and a structural unit derived from a polyol, wherein the weight ratio between the structural unit and the structural unit is within a range from 100:80 to 100:350.

### PRIOR ART DOCUMENTS

### PATENT DOCUMENTS

Patent Document 1: JP 2001-348516 A
Patent Document 2: JP H02-51516 A
Patent Document 3: JP 2010-70743 A
Patent Document 4: JP 2016-190907 A
Patent Document 5: EP 3 434 711 A1

### SUMMARY OF THE INVENTION

### PROBLEMS INVENTION AIMS TO SOLVE

As outlined above, conventional active energy ray-curable lithographic printing inks are not able to fully satisfy the required levels of printability, printed coating film applicability and printed coating film strength, and further improvements would be desirable. Among these properties, from the viewpoint of improving the printed coating film applicability and printed coating film strength, appropriate adjustments of the composition and blend amount of the binder resin composed of the resin and active energy ray-curable compound and used in producing the ink are very important.

In this regard, it is known that when a polyfunctional active energy ray-curable compound such as dipentaerythritol hexaacrylate is used, the curability of the ink can be easily improved. However, if the blend amount is increased, then curing shrinkage of the printed coating film becomes more likely, the flexibility tends to deteriorate, and the adhesion to the substrate also tends to be prone to deterioration.

Moreover, in the case of inks containing a diallyl phthalate resin as the binder resin, excellent curability can be achieved. However, because the solubility of diallyl phthalate resins in polyfunctional active energy ray-curable compounds is low, inks containing a diallyl phthalate resin are more likely to have exhibit high viscosity. As a result, the fluidity of the ink tends to deteriorate, and achieving satisfactory printability tends to be difficult. For these reasons, in the case of inks that use a diallyl phthalate resin and a polyfunctional active energy ray-curable compound, although excellent curability can be achieved with relative ease, other requirements such as adhesiveness to substrates and printability cannot be adequately satisfied, meaning further improvements are required.

On the other hand, in the printing process using the above inks, active energy rays such as ultraviolet rays or an electron beam are irradiated onto the ink to cure the printed coating film. Representative examples of known light sources include LED lamps, mercury lamps, and metal halide lamps. Among these, LED lamps have become widely used in recent years, as they offer inexpensive running costs, long lamp life, superior productivity at a higher light output than metal halide lamps, and good compatibility with even high-speed printing. However, as the light output of the active energy rays during irradiation is increased, curing shrinkage of the printed coating film becomes more likely, and the adhesiveness is prone to deterioration. These types of problems become more marked as the curability of the ink increases.

Against this background, an active energy ray-curable lithographic printing ink that has excellent curability, and yet exhibits little curing shrinkage, can realize excellent adhesiveness to substrates, and also has excellent printability would be very desirable.

Accordingly, the present invention provides an active energy ray-curable lithographic printing ink that has excellent curability, can form a printed coating film having excellent adhesiveness to substrates, and exhibits excellent printability. Further, the present invention also provides printed matter having excellent printed coating film applicability and printed coating film strength, prepared using this active energy ray-curable lithographic printing ink. Moreover, the present invention also provides a method for producing printed matter using the above active energy ray-curable lithographic printing ink that enables the irradiation of active energy rays during curing to be conducted at high light output.

### MEANS FOR SOLUTION OF THE PROBLEMS

As a result of intensive investigations, the inventors of the present invention discovered that by using a rosin-modified resin and a specific amount of dipentaerythritol hexaacrylate as binder components in an ink, and also including an extender pigment, the curability and flexibility of the printed coating film could be adjusted favorably, enabling an ink viscosity suitable for lithographic printing and excellent adhesiveness of the printed coating film to substrates to be achieved, thus enabling them to complete the present invention.

The invention is set out in appended claim 1. The dependent claims describe advantageous embodiments.

### EFFECTS OF THE INVENTION

The present invention is able to provide an active energy ray-curable lithographic printing ink that has excellent curability, can form a printed coating film having excellent adhesiveness to substrates, and exhibits excellent printability. Further, the present invention can also provide printed matter having excellent printed coating film applicability and printed coating film strength by using this active energy ray-curable lithographic printing ink.

Moreover, the present invention is also able to provide a method for producing printed matter using the above active energy ray-curable lithographic printing ink which enables the irradiation of active energy rays during curing to be conducted at high light output, and which is also compatible with high-speed printing.

### EMBODIMENTS FOR CARRYING OUT THE INVENTION

Embodiments of the present invention are described below in detail. However, the present invention is not limited to the embodiments disclosed below.

### 1. Active Energy Ray-Curable Lithographic Printing Ink

One embodiment relates to an active energy ray-curable lithographic printing ink (hereafter sometimes referred to as simply "the ink") containing a rosin-modified resin (A), an active energy ray-curable compound (B), a photopolymerization initiator (C), and an extender pigment (D), wherein the viscosity of the ink at 25°C is within a range from 10 to 120 Pa·s, as specified in claim 1.

Generally, dipentaerythritol hexaacrylate (DPHA) (B1), which is classified as a polyfunctional acrylate, has excellent curability. However, when the amount of this compound in an ink is high, the printed coating film tends to undergo curing shrinkage, and the adhesiveness tends to deteriorate. In contrast, in the ink of the above embodiment, by using the rosin-modified resin (A) which exhibits favorable solubility in DHPA (B1), and also using the specified photopolymerization initiator (C) and a specific amount of the extender pigment (D), the adhesiveness of the printed coating film can be improved while maintaining excellent printability. In the above ink, the components (A) to (D) are classified as binder components. Accordingly, as described below, the ink may also contain a pigment and any of various additives.

Although not constrained by any particular theory, it is thought that by ensuring the binder components in the ink satisfy the requirements of claim 1, the printed coating film can be imparted with flexibility, and as a result, curing shrinkage of the printed coating film can be suppressed, enabling an improvement in the adhesiveness. Accordingly, by using the embodiment described above, an active energy ray-curable lithographic printing ink can be obtained that has excellent printability and is capable of forming a printed coating film having excellent printed coating film applicability and printed coating film strength.

The viscosity of the above ink is within a range from 10 to 120 Pa·s, preferably from 20 to 110 Pa·s, and more preferably from 30 to 100 Pa·s. By adjusting the viscosity to a value within this range, the fluidity of the ink is favorable, and improvements in the glossiness and misting resistance can be more easily realized. The above ink viscosity refers to the value obtained by measurement at room temperature (25°C) using a viscometer HAAKE RS600 manufactured by EKO Instruments Co., Ltd. equipped with a cone-and-plate sensor, using a measurement method employing the flow curve mode.

The constituent components of the ink are described below in further detail.

### 1-1. Rosin-Modified Resin (A)

In this description, the "rosin-modified resin (A)" is a polymer of a rosin acid and at least a polyol (A5). When the rosin-modified resin (A) is used to form an active energy ray-curable lithographic printing ink, the conjugated double bonds in the rosin acid can cause curing inhibition due to oxygen in the air. Accordingly, in one embodiment, the rosin-modified resin (A) preferably includes a structure obtained by adding an α,β-unsaturated carboxylic acid or acid anhydride thereof (A2) to the rosin acid to reduce or eliminate conjugated double bonds within the resin, and may also be a resin obtained by performing a subsequent esterification.

The rosin-modified resin (A) preferably has a structural unit (a12) derived from a compound obtained by addition of the α,β-unsaturated carboxylic acid or acid anhydride thereof (A2) to a conjugated rosin acid (A1), a structural unit (a3) derived from an organic monobasic acid (A3) excluding the conjugated rosin acid (A1), and a structural unit (a5) derived from the polyol (A5), wherein the mass ratio (a12):(a3) between the structural unit (a12) and the structural unit (a3) is within a range from 100:10 to 100:350.

The above mass ratio (a12):(a3) is within a range from 100: 10 to 100:350, preferably from 100:15 to 100:300, and more preferably from 100:18 to 100:250. In the rosin-modified resin (A), when the mass ratio (a12):(a3) falls within the above range, ensuring favorable glossiness for the printed coating film becomes easier. Further, a resin having a favorable molecular weight distribution can be more easily obtained, and as a result, the solubility of the resin in the active energy ray-curable compound (B) and the misting resistance of the ink can be more easily improved.

The above mass ratio (a12):(a3) is the ratio between the masses of all the structural units (a12) and all the structural units (a3) in the rosin-modified resin (A), and means the value for the mass of the structural units (a3) when the mass of the structural units (a12) in the rosin-modified resin (A) is deemed to be 100. The mass of the structural units (a12) and the mass of the structural units (a3) are calculated by subtracting the residual amounts of each of the monomers following completion of the reaction from the amounts of the above monomers (A1), (A2) and (A3) used in the production of the rosin-modified resin (A). Specific examples of the calculation method are described in detail in the Examples.

In one embodiment, the rosin-modified resin (A) may be a polymer compound obtained by reaction of a compound obtained by addition of the α,β-unsaturated carboxylic acid or acid anhydride thereof (A2) to the conjugated rosin acid (A1), and the organic monobasic acid (A3) excluding the conjugated rosin acid (A1), with the polyol (A5). The polymer compound is a rosin-modified polyester resin having a structure in which the structural units (a12) and (a3) derived from the various monomers and the structural unit (a5) are mutually bonded together via ester linkages.

In one embodiment, the rosin-modified resin (A) may also have a structural unit (a4) derived from a polybasic acid or anhydride thereof (A4). This polybasic acid or anhydride thereof (A4) means a compound different from the α,β-unsaturated carboxylic acid or acid anhydride thereof (A2) described above. The polybasic acid or anhydride thereof (A4) preferably has no unsaturated bonds within the molecule. In those cases where the structural unit (a4) is included in the rosin-modified resin (A), adjustment of the rigidity and flexibility of the printed coating film tends to be easier.

In one embodiment, the rosin-modified resin (A) may be a polymer compound obtained by reaction of a compound obtained by addition of the α,β-unsaturated carboxylic acid or acid anhydride thereof (A2) to the conjugated rosin acid (A1), the organic monobasic acid (A3) excluding the conjugated rosin acid (A1), and the polybasic acid or anhydride thereof (A4), with the polyol (A5). The polymer compound is a rosin-modified polyester resin having a structure in which the structural units (a12), (a3) and (a4) derived from the various monomers and the structural unit (a5) are mutually bonded together via ester linkages.

In one embodiment, the rosin-modified polyester resin (A) may also contain a structural unit (a1) derived from the conjugated rosin acid (A1) and/or a structural unit (a2) derived from the α,β-unsaturated carboxylic acid or acid anhydride thereof (A2).

The rosin-modified polyester described above is referred to as the rosin-modified resin (A) in the following detailed description.

Although not a particular limitation, in those cases when, for example, a compound having two carboxyl groups such as maleic acid (anhydride) is used as the α,β-unsaturated carboxylic acid or acid anhydride thereof (A2), and a compound having two carboxyl groups such as succinic anhydride is used as the polybasic acid or anhydride thereof (A4), the rosin-modified resin (A) may typically have partial structures represented by formulas (I) to (VI) shown below. Among these, the partial structures represented by formulas (IV) to (VI) below are specific examples of resin terminal structures. However, the partial structures of the rosin-modified resin (A) are not limited to these structures shown below.

Further, although described below in further detail, in those cases where, following the addition reaction of the α,β-unsaturated carboxylic acid or acid anhydride thereof (A2) to the conjugated rosin acid (A1) (the Diels-Alder addition reaction described below), a residual amount of the component (A2) exists, a portion of the structural units (a4) included in the formulas (1), (II) and (IV) shown below may be replaced with structural units (a2) derived from the α,β-unsaturated carboxylic acid or acid anhydride thereof (A2). Further, in those cases where, following the addition reaction of the α,β-unsaturated carboxylic acid or acid anhydride thereof (A2) to the conjugated rosin acid (A1) (the Diels-Alder addition reaction described below), a residual amount of the component (A1) exists, a portion of the structural units (a3) included in the formulas (1V), (V) and (VI) may be replace with structural units (a1) derived from the component (A1).

### (Examples of Partial Structures of the Rosin-Modified Resin (A))

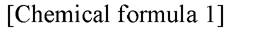

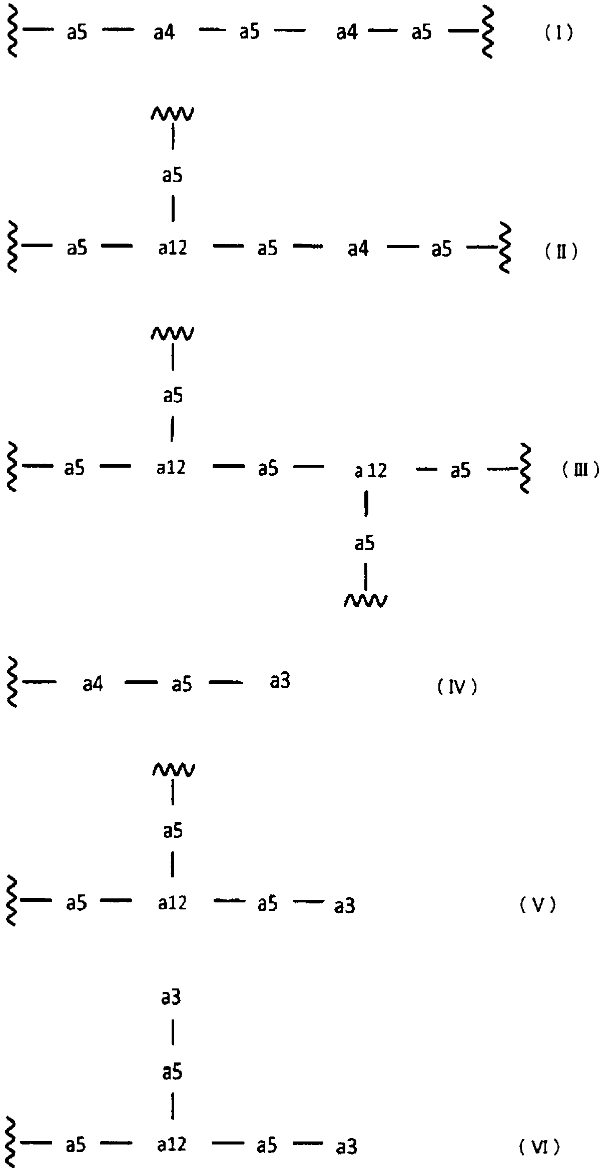

The monomers that constitute each of the structural units are described below.

### <Conjugated Rosin Acid (A1)>

The compound having the structural unit (a12) that constitutes part of the rosin-modified resin (A) is formed by a Diels-Alder addition reaction of the conjugated rosin acid (A1) and the α,β-unsaturated carboxylic acid or acid anhydride thereof (A2).

The conjugated rosin acid (A1) is a rosin acid having conjugated double bonds. In this description, a "rosin acid" means an organic monobasic acid having a cyclic diterpene skeleton, or a derivative thereof. The rosin acid may be, for example, a rosin acid, a disproportionated rosin acid, a hydrogenated rosin acid, or an alkali metal salt of one of these compounds. Further, the term "conjugated double bonds" means a bonding sequence in which a plurality of double bonds are linked in an alternating sequence with single bonds sandwiched therebetween. However, this term excludes the conjugated double bonds of π-electron conjugated systems incorporated within aromatic compounds. In other words, the "conjugated rosin acid (A1)" described in the present description means the type of rosin acid described above, and excludes hydrogenated rosin acids that do not have conjugated double bonds.

Specific examples of the conjugated rosin acid (A1) include abietic acid, and conjugated compounds thereof such as neoabietic acid, palustric acid and levopimaric acid. Furthermore, examples of natural resins containing these types of conjugated rosin acids (A1) include gum rosin, wood rosin and tall oil rosin. These natural resins generally contain a conjugated rosin acid (A1) together with rosin acids that do not have conjugated double bonds, but these natural resins may still be used during the production of the rosin-modified resin (A). The rosin acids that do not have conjugated double bonds participate in the reaction as the organic monobasic acid (A3) described below. Further, depending on the blend amount used during production of the rosin-modified resin (A), the conjugated rosin acid (A1) may also form the structural unit (a1) derived from the compound.

### <α,β-Unsaturated Carboxylic Acid or Acid Anhydride thereof (A2)>

Specific examples of α,β-unsaturated carboxylic acids or acid anhydrides thereof (A2) that can be used to obtain the compound having the structural unit (a12) that constitutes part of the rosin-modified resin (A) include acrylic acid, methacrylic acid, maleic acid, fumaric acid, citraconic acid, itaconic acid, crotonic acid, isocrotonic acid, cinnamic acid, 2,4-hexadienoic acid, and the acid anhydrides of these acids.

From the viewpoint of the reactivity with the conjugated rosin acid (A1), maleic acid and the acid anhydride thereof are preferred. Depending on the blend amount used during production of the rosin-modified resin (A), the α,β-unsaturated carboxylic acid or acid anhydride thereof (A2) may also form the structural unit (a2) derived from this compound.

### <Organic Monobasic Acid (A3)>

Examples of organic monobasic acids (A3) that can be used to obtain the structural unit (a3) that constitutes part of the rosin-modified resin (A) include any organic monobasic acid that does not have conjugated double bonds, and known materials may be used as desired. Specific examples include:
saturated fatty acids such as acetic acid, propionic acid, butyric acid, valeric acid, caproic acid, enanthic acid, caprylic acid, pelargonic acid, capric acid, undecylic acid, lauric acid, tridecylic acid, myristic acid, pentadecylic acid, palmitic acid, heptadecylic acid, stearic acid, nonadecanoic acid, arachic acid and behenic acid;
unsaturated fatty acids such as crotonic acid, linderic acid, tsuzuic acid, myristoleic acid, palmitoleic acid, undecylenic acid, oleic acid, elaidic acid, gadoleic acid, gondoic acid, setoleic acid, erucic acid, brassidic acid, linoelaidic acid, linolenic acid and arachidonic acid;
aromatic monobasic acids such as benzoic acid, methylbenzoic acid, tertiary-butylbenzoic acid, naphthoic acid, and ortho-benzoylbenzoic acid; and
compounds having conjugated double bonds but not having a cyclic diterpene skeleton, such as conjugated linoleic acid, eleostearic acid, parinaric acid and calendic acid.

Further examples include the fatty acids of natural oils and fats, such as tung oil fatty acid, linseed oil fatty acid, soybean fatty acid, coconut oil fatty acid, (dehydrated) castor oil fatty acid, palm oil fatty acid, safflower oil fatty acid, cottonseed oil fatty acid, rice bran oil fatty acid, olive oil fatty acid, and rapeseed oil fatty acid. Moreover, dimer acids of these fatty acids such as tung oil dimer fatty acid and linseed oil dimer fatty acid may also be used.

Moreover, as mentioned above, rosin acids that do not have conjugated double bonds, such as pimaric acid, isopimaric acid, sandaracopimaric acid and dehydroabietic acid may also be used as the organic monobasic acid (A3). The organic monobasic acid (A3) used in the present invention may be composed solely of such rosin acids that do not have conjugated double bonds.

In one embodiment, from the viewpoint of improving the compatibility with the pigment, facilitating an improvement in the glossiness, the inclusion of an aromatic monobasic acid as the organic monobasic acid (A3) from among the compounds listed above is particularly preferred.

### <Polybasic Acid or Anhydride Thereof (A4)>

The rosin-modified resin (A) may, if necessary, contain a structural unit (a4) derived from a polybasic acid or anhydride thereof (A4) excluding the α,β-unsaturated carboxylic acid or acid anhydride thereof (A2). The polybasic acid or anhydride thereof (A4) forms ester linkages via reaction with the polyol (A5). An aromatic polybasic acid or acid anhydride thereof, or an aliphatic polybasic acid or acid anhydride thereof may be used as the polybasic acid or anhydride thereof (A4), and the aliphatic polybasic acid or acid anhydride thereof may have either a linear structure or a branched structure. Further, a polybasic acid or acid anhydride having a cyclic structure, namely an alicyclic polybasic acid or acid anhydride thereof, may also be used.

Specific examples of polybasic acids or acid anhydrides (A4) that can be used to obtain the structural unit (a4) that constitutes part of the rosin-modified resin include the compounds listed below.

Examples of aliphatic polybasic acids or acid anhydrides thereof include oxalic acid, malonic acid, succinic acid, glutaric acid, pimelic acid, sebacic acid, azelaic acid, alkyl succinic acids or alkenyl succinic acids such as dodecylsuccinic acid, tetradecylsuccinic acid and pentadecylsuccinic acid, and acid anhydrides of these acids.

Examples of alicyclic polybasic acids or acid anhydrides thereof include 1,2,3,6-tetrahydrophthalic acid, 3-methyl-1,2,3,6-tetrahydrophthalic acid, 4-methyl-1,2,3,6-tetrahydrophthalic acid, hexahydrophthalic acid, 3-methylhexahydrophthalic acid, 4-methylhexahydrophthalic acid, himic acid, 3-methylhimic acid and 4-methylhimic acid, and acid anhydrides of these acids.

Examples of aromatic polybasic acids or acid anhydrides thereof include o-phthalic acid, terephthalic acid, trimellitic acid and pyromellitic acid, and acid anhydrides of these acids.

In a similar manner to the polybasic acid or anhydride thereof (A4) described above, during the production of the rosin-modified resin (A), in those cases where an excess of the α,β-unsaturated carboxylic acid or acid anhydride thereof (A2) is used relative to the conjugated rosin acid (A1), ester linkages are formed by reaction between the α,β-unsaturated carboxylic acid or acid anhydride thereof (A2) and the polyol (A5). In such embodiments, the rosin-modified resin (A) will include structural units (a2) that participate in the esterification reaction between the polyol (A5) and the component (A2). For example, when a dibasic acid anhydride such as maleic anhydride is used as the α,β-unsaturated carboxylic acid or acid anhydride thereof (A2), the dibasic acid anhydride participates in the Diels-Alder addition reaction with the conjugated rosin acid (A1) and the esterification reaction with the polyol (A5).

In one embodiment, in those cases where the polybasic acid or anhydride thereof (A4) is used, the proportion of the structural unit (a4) in the rosin-modified resin (A), based on the total number of moles of all the structural units except for the structural unit (a5) described below, is preferably not more than 65.0 mol%, more preferably not more than 60.0 mol%, even more preferably not more than 55.0 mol%, and particularly preferably 50.0 mol% or less.

Even in those cases where the polybasic acid or anhydride thereof (A4) is not used in the production of the rosin-modified resin (A), when an excess of the α,β-unsaturated carboxylic acid or acid anhydride thereof (A2) is used relative to the conjugated rosin acid (A1), the structural unit (a2) may sometimes be formed from the α,β-unsaturated carboxylic acid or acid anhydride thereof (A2). In such cases, the proportion of the structural unit (a2) is more preferably not more than 8.0 mol%, even more preferably not more than 6.5 mol%, and particularly preferably 5.0 mol% or less.

In the present description, the proportion (mol%) of each structural unit in the rosin-modified resin (A) is calculated in the same manner as that described above for the mass ratio between structural units, by subtracting the residual amount of each component following completion of the reaction from the amount of the monomer corresponding with the structural unit used in the production of the rosin-modified resin (A).

From the viewpoints of improving the compatibility with the active energy ray-curable compound (B), improving the fluidity, and enabling the glossiness and printability to be improved more easily, the number of carbon atoms in the structural unit (a4) is preferably not more than 16 (excluding carbonyl carbons). From these types of viewpoints, a compound having not more than 16 carbon atoms (excluding carbonyl carbons) is preferably used as the polybasic acid or anhydride thereof (A4). In one embodiment, at least one compound selected from the group consisting of succinic anhydride, 1,2,3,6-tetrahydrophthalic anhydride, tetradecylsuccinic anhydride, 1,2-cyclohexanedicarboxylic acid and 1,4-cyclohexanedicarboxylic acid is preferably used as the polybasic acid or anhydride thereof (A4).

### <Polyol (A5)>

Examples of polyols (A5) that can be used to obtain the structural unit (a5) that constitutes part of the rosin-modified resin (A) include any compound having two or more hydroxyl groups within the molecule, and there are no particular limitations. The polyol (A5) reacts with the carboxylic acids in the compound obtained from the Diels-Alder addition reaction between the conjugated rosin acid (A1) and the α,β-unsaturated carboxylic acid or acid anhydride thereof (A2), the organic monobasic acid (A3) and the polybasic acid or anhydride thereof (A4) to form ester linkages.

In one embodiment, the polyol (A5) may be a dihydric alcohol. Although not a particular limitation, specific examples of the dihydric alcohol are listed below.

### (Linear Alkylene Dihydric Alcohols)

1,2-ethanediol, 1,2-propanediol, 1,3-propanediol, 1,2-butanediol, 1,4-butanediol, 1,2-pentanediol, 1,5-pentanediol, 1,6-hexanediol, 1,2-hexanediol, 1,5-hexanediol, 2,5-hexanediol, 1,7-heptanediol, 1,8-octanediol, 1,2-octanediol, 1,9-nonanediol, 1,2-decanediol, 1,10-decanediol, 1,12-dodecanediol, 1,2-dodecanediol, 1,14-tetradecanediol, 1,2-tetradecanediol, 1,16-hexadecanediol, and 1,2-hexadecanediol.

### (Branched Alkylene Dihydric Alcohols)

2-methyl-2,4-pentanediol, 3-methyl-1,5-pentanediol, 2-methyl-2-propyl-1,3-propanediol, 2,4-dimethyl-2,4-pentanediol, 2,2-dimethyl-1,3-propanediol, 2,2,4-trimethyl-1,3-pentanediol, dimethyloloctane, 2-ethyl-1,3-hexanediol, 2,5-dimethyl-2,5-hexanediol, 2-methyl-1,8-octanediol, 2-butyl-2-ethyl-1,3-propanediol, and 2,4-diethyl-1,5-pentanediol.

### (Cyclic Alkylene Dihydric Alcohols)

1,2-cyclohexanediol, 1,4-cyclohexanediol, 1,4-cyclohexanedimethanol, 1,2-cycloheptanediol, tricyclodecanedimethanol, hydrogenated bisphenol A, hydrogenated bisphenol F, hydrogenated bisphenol S, hydrogenated catechol, hydrogenated resorcin, and hydrogenated hydroquinone.

Other specific examples include polyether polyols and polyester polyols such as polyethylene glycol (n = 2 to 20), polypropylene glycol (n = 2 to 20) and polytetramethylene glycol (n = 2 to 20).

In another embodiment, the polyol (A5) may be a trihydric or higher polyhydric alcohol. Specific examples include linear, branched and cyclic polyhydric alcohols such as glycerol, trimethylolpropane, pentaerythritol, 1,2,6-hexanetriol, 3-methylpentane-1,3,5-triol, hydroxymethylhexanediol, trimethyloloctane, diglycerol, ditrimethylolpropane, dipentaerythritol, sorbitol, inositol and tripentaerythritol.

One of the dihydric alcohols or trihydric or higher alcohols mentioned above may be used alone, or a combination of two or more compounds may be used. In one embodiment, the polyol (A5) preferably includes a dihydric alcohol and a trihydric or higher alcohol. In this embodiment, the proportion of the dihydric alcohol, relative to the total mass of the polyol (A5), is preferably within a range from 20 to 95 mol%. When the proportion of the dihydric alcohol within the polyol (A5) falls within this range, good adhesiveness is achieved, and the printed coating film applicability and printability can be more easily improved.

In one embodiment, a dihydric alcohol may be used alone as the polyol (A5). A single dihydric alcohol or a combination of two or more dihydric alcohols may be used. Cases in which the polyol (A5) includes a dihydric alcohol having a cyclohexane ring enable an improvement in the adhesiveness to be achieved more easily, and are consequently particularly preferred.

In one embodiment, the rosin-modified resin (A) can be produced by: (1) reaction of the conjugated rosin acid (A1) and the α,β-unsaturated carboxylic acid or acid anhydride thereof (A2), and (2) reaction of the compound obtained in the reaction (1), and carboxylic acid-containing compounds including the organic monobasic acid (A3) and the polybasic acid or anhydride thereof (A4), with the polyol (A5).

In the above reaction (1), is a Diels-Alder addition reaction between the conjugated double bond (diene) in the conjugated rosin acid (A1) and the double bond (dienophile) in the α,β-unsaturated carboxylic acid or acid anhydride thereof (A2). Further, the above reaction (2) is an esterification reaction between the carboxyl groups in the Diels-Alder addition reaction product obtained in the reaction (1), the organic monobasic acid (A3) and the polybasic acid or anhydride thereof (A4), and the hydroxyl groups in the polyol (A5).

The Diels-Alder addition reaction between the conjugated rosin acid (A1) and the α,β-unsaturated carboxylic acid or acid anhydride thereof (A2) yields a polyvalent carboxylic acid compound. Accordingly, a subsequent esterification reaction with the polyol (A5) enables an increase in the molecular weight.

In one embodiment, by using a combination of a dihydric alcohol and a trihydric or higher alcohol as the polyol (A5) during the above esterification reaction, the resin can be imparted with appropriate levels of flexibility and rigidity. As a result, in this embodiment, favorable printed coating film applicability including adhesiveness and favorable printability including misting resistance can be achieved with ease. Further, by also using the organic monobasic acid (A3) during the esterification reaction, any excessive increase in the molecular weight can be suppressed, and the molecular weight distribution can be controlled.

Moreover, the Diels-Alder addition reaction can eliminate the conjugated double bonds in the conjugated rosin acid (A1), and can also introduce polycyclic structures derived from the rosin acid into the rosin-modified resin (A). Typically, the conjugated double bonds within the conjugated rosin acid (A1) tend to cause curing inhibition during the active energy ray irradiation used for curing the ink. However, in the embodiment described above, because the conjugated double bonds in the conjugated rosin acid (A1) are eliminated by the Diels-Alder addition reaction, improving the curability of the ink becomes a simple task.

As described above, by using the rosin-modified resin (A) of the embodiment described above, the printability including the emulsification applicability and high-speed printability, the printed coating film applicability including the curability, and the printed coating film strength can all be improved. Furthermore, by incorporating structures of the polybasic acid or anhydride thereof (A4) having flexibility into the rosin-modified resin (A), in addition to the printed coating film applicability properties mentioned above, excellent adhesiveness and glossiness can also be achieved. In those cases where a polybasic acid containing a cyclohexane ring or an acid anhydride thereof is used as the polybasic acid or anhydride thereof (A4), even more superior adhesiveness can be achieved, which is particularly desirable.

There are no particular limitations on the conditions for the Diels-Alder addition reaction, and the reaction may be performed in accordance with normal methods. The reaction temperature may be determined with due consideration of the boiling points and reactivity of the compounds being used. In one embodiment, the reaction temperature is preferably within a range from 80 to 200°C, more preferably within a range from 100 to 200°C, and even more preferably within a range from 100 to 180°C.

The Diels-Alder addition reaction may be performed in the presence of a polymerization inhibitor. Specific examples of polymerization inhibitors that may be used include hydroquinone, p-methoxyphenol, methylhydroquinone, methoxyhydroquinone, 2,6-di-t-butylphenol, 2,6-di-t-butyl-4-hydroxytoluene, t-butylcatechol, 4-methoxy-1-naphthol and phenothiazine.

There are also no particular limitations on the conditions for the esterification reaction, and the reaction may be performed in accordance with normal methods. The reaction temperature may be determined with due consideration of the boiling points and reactivity of the compounds being used. In one embodiment, the reaction temperature is preferably within a range from 200 to 300°C, more preferably within a range from 200 to 280°C, and even more preferably within a range from 200 to 260°C.

Further, if necessary, a catalyst can be used in the esterification reaction. Examples of catalysts that can be used include organic sulfonic acids such as benzenesulfonic acid, p-toluenesulfonic acid, p-dodecylbenzenesulfonic acid, methanesulfonic acid and ethanesulfonic acid, mineral acids such as sulfuric acid and hydrochloric acid, as well as trifluoromethylsulfuric acid and trifluoromethylacetic acid. Other examples of catalysts that can be used include metal complexes such as tetrabutyl zirconate and tetraisobutyl titanate, and metal salt catalysts such as magnesium oxide, magnesium hydroxide, magnesium acetate, calcium oxide, calcium hydroxide, calcium acetate, zinc oxide and zinc acetate. These catalysts are typically used in an amount within a range from 0.01 to 5% by mass relative to the total mass of all of the components used during the production of the rosin-modified resin (A). In order to suppress the resin coloration that can occur as a result of using a catalyst, hypophosphoric acid, triphenyl phosphite, triphenyl phosphate or triphenylphosphine may also be used in combination with the catalyst during resin production.

In the production of the rosin-modified resin (A), the monomers (A1) to (A5) described above that constitute the resin may be blended simultaneously, or blended in a stepwise manner.

For example, a mixture of the conjugated rosin acid (A1), the α,β-unsaturated carboxylic acid or acid anhydride thereof (A2), the organic monobasic acid (A3) and the polyol (A5), together with the polybasic acid or anhydride thereof (A4) where necessary, may be used to conduct the reaction in a two-step process. In this case, the reaction temperature is first set a temperature that allows the Diels-Alder addition reaction between the conjugated rosin acid (A1) and the α,β-unsaturated carboxylic acid or acid anhydride thereof (A2) to proceed. More specifically, initially the reaction temperature is controlled at a temperature that allows the Diels-Alder addition reaction to proceed, and after holding that temperature for a prescribed period of time, the reaction mixture is then heated to a temperature that enables the esterification reaction to proceed.

In another method, the conjugated rosin acid (A1) and the α,β-unsaturated carboxylic acid or acid anhydride thereof (A2) are first combined, and following completion of the Diels-Alder addition reaction, the organic monobasic acid (A3) and the polyol (A5), and the polybasic acid or anhydride thereof (A4) when used, are added, and the esterification reaction is performed.

In one embodiment, in the case where an excess of the α,β-unsaturated carboxylic acid or acid anhydride thereof (A2) is used relative to the conjugated rosin acid (A1), the portion of the component (A2) that does not participate in the Diels-Alder addition reaction is consumed in the subsequent esterification reaction in a similar manner to the polybasic acid or anhydride thereof (A4). The same compound as the α,β-unsaturated carboxylic acid or acid anhydride thereof (A2) may be used as the polybasic acid or anhydride thereof (A4).

In one embodiment, the blend amount of the α,β-unsaturated carboxylic acid or acid anhydride thereof (A2), relative to the conjugated rosin acid (A1), is preferably within a range from 80 to 200 mol%, more preferably within a range from 90 to 200 mol%, and even more preferably within a range from 100 to 200 mol%. When the blend amount of the α,β-unsaturated carboxylic acid or acid anhydride thereof (A2) is adjusted to a value within this range, obtaining a rosin-modified resin (A) having excellent curability and fluidity is easier.

Furthermore, in one embodiment, the blend amount of the organic monobasic acid (A3), relative to the conjugated rosin acid (A1), is preferably within a range from 20 to 400% by mass, more preferably within a range from 100 to 350% by mass, and even more preferably within a range from 150 to 300% by mass. When this blend amount is at least 100% by mass, gelling during the resin synthesis can be more easily suppressed. Further, when the blend amount is not more than 400% by mass, the weight average molecular weight of the rosin-modified resin can be more easily controlled. Furthermore, when an active energy ray-curable lithographic printing ink is produced using a rosin-modified resin that has been obtained with the above blend amount set as described above, the fluidity of the ink improves, and superior glossiness and printability can be more easily achieved.

In one embodiment, a method for producing the rosin-modified resin (A) includes:
a first step of conducting an addition reaction of the α,β-unsaturated carboxylic acid or acid anhydride thereof (A2) to the conjugated rosin acid (A1), and
a second step of conducting a reaction of the compound obtained in the first step, the organic monobasic acid (A3) excluding the above conjugated rosin acid (A1), and the polyol (A5). If necessary, the polybasic acid or anhydride thereof (A4) may also be included in the second step.

In the production method described above, the first step is preferably performed at a reaction temperature within a range from 80°C to 200°C. Further, the second step is preferably performed at a reaction temperature within a range from 200°C to 300°C.

The weight average molecular weight of the rosin-modified resin (A) is preferably within a range from 2,500 to 50,000, more preferably within a range from 2,500 to 35,000, and particularly preferably within a range from 3,000 to 30,000. When the weight average molecular weight of the rosin-modified resin (A) falls within this range, an ink that uses the resin has favorable emulsification properties and excellent printability. The weight average molecular weight represents the polystyrene-equivalent value measured by gel permeation chromatography (GPC).

The acid value of the rosin-modified resin (A) is preferably within a range from 5 to 150, more preferably within a range from 10 to 140, even more preferably within a range from 15 to 130, and particularly preferably within a range from 20 to 120. When the acid value of the rosin-modified resin (A) falls within this range, an ink that uses the resin has favorable emulsification properties and excellent printability.

In the rosin-modified resin (A), the hydroxyl group/carboxyl group ratio is preferably within a range from 0.7 to 1.5, more preferably within a range from 0.8 to 1.5, and even more preferably within a range from 0.8 to 1.3.

Further, the melting point of the rosin-modified resin (A) is preferably at least 50°C, more preferably within a range from 60 to 110°C, and even more preferably within a range from 70 to 100°C. This melting point can be measured with a Melting Point M-565 apparatus manufactured by BUCHI AG, under conditions including a rate of temperature increase of 0.5°C/minute.

Although not a particular limitation, in one embodiment, the rosin-modified resin (A) preferably has a polystyrene-equivalent weight average molecular weight of 3,000 to 35,000, an acid value of 15 to 120, and a melting point of at least 60°C. When an active energy ray-curable lithographic printing ink is produced using a rosin-modified resin (A) for which each of these properties falls within the respective range above, excellent emulsification properties and ink transferability can be more easily obtained.

In one embodiment, the rosin-modified resin (A), when prepared as a mixture containing the rosin-modified resin (A), the dipentaerythritol hexaacrylate (B1) and trimethylolpropane triacrylate in a mass ratio of 30:35:35, preferably has a viscosity at 25°C within a range from 10 to 50 Pa·s. This viscosity is more preferably within a range from 15 to 45 Pa·s, and even more preferably within a range from 15 to 40 Pa·s. A rosin-modified resin (A) having these viscosity characteristics has a lower viscosity than representative binder resins such as diallyl phthalate. Accordingly, the blend amount of the polyfunctional active energy ray-curable compound can be easily increased without impairing the fluidity.

The amount of the rosin-modified resin (A) in the active energy ray-curable lithographic printing ink, relative to the total mass of the ink, is preferably within a range from 12 to 40% by mass, more preferably from 12 to 35% by mass, even more preferably from 12 top 30% by mass, and most preferably from 12 to 19% by mass.

### 1-2. Active Energy Ray-Curable Compound (B)

In this description, the expression "active energy ray-curable compound" means a compound having a (meth)acryloyl group within the molecule, and compounds having an acryloyl group within the molecule are preferred. The active energy ray-curable lithographic printing ink contains dipentaerythritol hexaacrylate (B1) as the active energy ray-curable compound (B), wherein the amount of the dipentaerythritol hexaacrylate (B1) is within a range from 20 to 37% by mass relative to the total mass of the active energy ray-curable lithographic printing ink. This amount of the dipentaerythritol hexaacrylate (B1) is more preferably within a range from 25 to 36% by mass, and even more preferably within a range from 25 to 35% by mass.

The active energy ray-curable compound (B) may be selected appropriately in accordance with the printed coating film properties that are required. If necessary, an oligomer such as a polyester acrylate, polyurethane acrylate or epoxy acrylate may be used in combination with the above compound.

According to the invention the active energy ray-curable compound (B) includes the dipentaerythritol hexaacrylate (B1) and a polyfunctional acrylate (B2) having three or more acryloyl groups within the molecule (but excluding dipentaerythritol hexaacrylate (B1)).

According to the invention the polyfunctional acrylate (B2) having three or more acryloyl groups within the molecule contains at least one compound selected from the group consisting of trimethylolpropane triacrylate, trimethylolpropane ethylene oxide adduct (3 to 30 mol) triacrylate, trimethylolpropane propylene oxide adduct (3 to 30 mol) triacrylate, ditrimethylolpropane tetraacrylate, ditrimethylolpropane ethylene oxide adduct (4 to 40 mol) tetraacrylate, and ditrimethylolpropane propylene oxide adduct (4 to 40 mol) tetraacrylate.

In one embodiment, at least one compound selected from the group consisting of trimethylolpropane triacrylate and ditrimethylolpropane tetraacrylate may be used as the polyfunctional acrylate (B2) having three or more acryloyl groups within the molecule. The use of a combination of trimethylolpropane triacrylate and ditrimethylolpropane tetraacrylate is preferred.

The amount of the above polyfunctional acrylate (B2) having three or more acryloyl groups within the molecule, relative to the total mass of the active energy ray-curable lithographic printing ink is within a range from 5 to 40% by mass. This amount of the polyfunctional acrylate is preferably from 10 to 35% by mass, and more preferably from 20 to 35% by mass.

The proportion of the above component (B1) relative to the total mass of the active energy ray-curable compound (B) is preferably at least 30% by mass, more preferably at least 35% by mass, and even more preferably 40% by mass or greater. In one embodiment, this proportion of the component (B1) may be 100% by mass. On the other hand, the proportion of the component (B1) is preferably not more than 90% by mass, more preferably not more than 80% by mass, and even more preferably 70% by mas or less.

In one embodiment, a varnish for an active energy ray-curable lithographic printing ink can be produced using the rosin-modified resin (A) and the active energy ray-curable compound (B). Although there are no particular limitations, the varnish for an active energy ray-curable lithographic printing ink may contain from 10 to 80% by mass of the rosin-modified resin (A) and from 20 to 90% by mass of the active energy ray-curable compound (B), relative to the total mass of the varnish. In one embodiment, the varnish preferably contains 20 to 60% by mass of the rosin-modified resin (A) and 40 to 80% by mass of the active energy ray-curable compound (B).

The above varnish for an active energy ray-curable lithographic printing ink may also contain a photopolymerization inhibitor described below in addition to the above components. In this type of embodiment, the photopolymerization inhibitor may be added and used via typical methods. In those cases where a photopolymerization inhibitor is added to the varnish, from the viewpoint of not inhibiting the curability, the blend amount of the inhibitor is preferably not more than 3% by mass, and more preferably within a range from 0.1 to 1% by mass, relative to the total mass of the varnish for an active energy ray-curable lithographic printing ink.

The varnish for an active energy ray-curable lithographic printing ink can be produced, for example, by mixing the above components under temperature conditions within a range from normal temperature to 150°C. In one embodiment, a varnish obtained by using suitable amounts of the rosin-modified resin (A), the dipentaerythritol hexaacrylate (B1), hydroquinone, and trimethylolpropane triacrylate as required, and heating and melting these components under temperature conditions of 100°C can be used favorably.

### 1-3. Photopolymerization Initiator (C)

The active energy ray-curable lithographic printing ink cures upon irradiation with active energy rays. In one embodiment, the active energy ray-curable lithographic printing ink is preferably an ink that can be cured with ultraviolet rays. A photopolymerization initiator (C) is preferably added to the ink to form an ultraviolet ray-curable ink. According to the invention the active energy ray-curable lithographic printing ink contains a photopolymerization initiator (C) in addition to the above rosin-modified resin (A) and active energy ray-curable compound (B). The photopolymerization initiator (C) includes at least two types of compounds selected from the group consisting of acylphosphine oxide-based compounds (C1), thioxanthone-based compounds (C2), and oxime ester-based compounds (C3). When a combination of two or more types of photopolymerization initiators is used, the radical polymerization reaction can be initiated at different wavelengths, and therefore the ink coating film can be cured easily under various printing conditions with different light amounts and wavelengths for the active energy rays, meaning the curability can be more easily improved.

Specific examples of the acylphosphine oxide-based compounds (C1) include 2,4,6-trimethylbenzoyl diphenylphosphine oxide, bis(2,4,6-trimethylbenzoyl)-phenylphosphine oxide, and ethyl(2,4,6-trimethylbenzoyl)-phenylphosphinate.

Specific examples of the thioxanthone-based compounds (C2) include 2-isopropylthioxanthone, 2,4-dimethylthioxanthone, 2,4-diethylthioxanthone, 2,4-dichlorothioxanthone, 1-chloro-4-propylthioxanthone, 2-chlorothioxanthone, 2-isopropylthioxanthone, and isoproylthioxanthone dimer.

Specific examples of the oxime ester-based compounds (C3) include 1,2-octanedione, 1-[4-(phenylthio)phenyl]-,2-(O-benzoyloxime), and ethanone, 1-[9-ethyl-6-(2-methylbenzoyl)-9H-carbazol-3-yl]-, 1-(O-acetyloxime).

In one embodiment, excellent curability can be obtained by using, as the above photopolymerization initiator (C), a combination of at least two types of photopolymerization initiators selected from the group consisting of acylphosphine oxide-based compounds (C1), thioxanthone-based compounds (C2), and oxime ester-based compounds (C3). In one embodiment, the photopolymerization initiator (C) may be a combination of at least two compounds selected from the group consisting of 2,4,6-trimethylbenzoyl diphenylphosphine oxide, 2,4-diethylthioxanthone, and 1,2-octanedione, 1-[4-(phenylthio)phenyl]-,2-(O-benzoyloxime).

In another embodiment, even more superior curability can be easily realized by also using, in addition to the photopolymerization initiator of the embodiment described above, at least one of the benzophenone-based compounds (C4) and alkylphenone-based compounds (C5) described below.

Specific examples of the benzophenone-based compounds (C4) include benzophenone, methylbenzophenone, methyl o-benzoylbenzoate, 4-phenylbenzophenone, 4,4'-bisdiethylaminobenzophenone, (1-[4-(4-benzoylphenylsulfanyl)phenyl]-2-methyl-2-(4-methylphenylsulfonyl)propan-1-one, 4-(4-methylphenylthio)benzophenone, methyl o-benzoylbenzoate, 4,4'-dichlorobenzophenone, hydroxybenzophenone, 4-benzoyl-4'-methyl-diphenyl sulfide, acrylated benzophenone, 3,3',4,4'-tetra(t-butylperoxycarbonyl)benzophenone, 3,3'-dimethyl-4-methoxybenzophenone, thioxanthone-based initiators such as 2-isopropylthioxanthone, 2,4-dimethylthioxanthone, 2,4-diethylthioxanthone and 2,4-dichlorothioxanthone, Michler's ketone, 4,4'-bisdiethylaminobenzophenone, 3,3',4,4'-tetra(t-butylperoxycarbonyl)benzophenone, and benzophenone derivative polymers.

Specific examples of the alkylphenone-based compounds (C5) include 2-methyl-1-(4-methylthiophenyl)-2-morpholinopropan-1-one, 2-benzyl-2-dimethylamino-1-(4-morpholinophenyl)-butanone-1, 2-(dimethylamino)-2-[(4-methylphenyl)methyl]-1-[4-(4-morpholinyl)phenyl]-1-butanone, diethoxyacetophenone, 4-(2-hydroxyethoxy)phenyl (2-hydroxy-2-propyl) ketone, 2-methyl-2-morpholino(4-thiomethylphenyl)propan-1-one, 2-hydroxy-2-methyl-1-phenylpropan-1-one, 1-hydroxycylohexyl phenyl ketone, 2,2-dimethoxy-1,2-diphenylethan-1-one, 2-hydroxy-2-methyl-1-phenylpropan-1-one, [4-(2-hydroxyethoxy)-phenyl]-2-hydroxy-2-methyl-1-propan-1-one, 2-hydroxy-1-{4-[4-(2-hydroxy-2-methylpropionyl)-benzyl]phenyl}-2-methylpropan-1-one, 1,1'-(oxybis(4,1-phenylene))bis(2-hydroxy)-2-methylpropan-1-one, benzyl dimethyl ketal, oligo{2-hydroxy-2-methyl-1-[4-(1-methylvinyl)phenyl]propane} and 4-(2-acryloyloxyethoxy)phenyl 2-hydroxy-2-propyl ketone.

### 1-4. Extender Pigment (D)

The term "extender pigment" means a pigment that has no coloring power, and is distinct from the colored pigment described below. According to the invention the extender pigment (D) includes at least one compound selected from the group consisting of calcium carbonate, magnesium carbonate, magnesium silicate, and silicon dioxide. One of these extender pigments may be used alone, or a combination of two or more extender pigments may be used.

The amount of the extender pigment (D) in the active energy ray-curable lithographic printing ink is preferably within a range from 0.3 to 8% by mass. By adjusting the amount of the extender pigment (D) to a value within this range, adjustment of the viscosity of the ink becomes easier, and the fluidity and misting resistance can be more easily improved. Further, the flexibility of the printed coating film also improves, and as a result, it is thought that the curability can be more easily improved.

The extender pigment (D) includes at least one compound selected from the group consisting of calcium carbonate, magnesium carbonate, magnesium silicate and silicon dioxide. In one embodiment, the extender pigment (D) is preferably a combination of: (D1) at least one compound selected from the group consisting of calcium carbonate, magnesium carbonate and magnesium silicate, and (D2) silicon dioxide. In this type of embodiment, the blend ratio between (D1) and (D2) is not particularly limited, and may be within a range from 100: 1 to 100:60. The blend ratio is preferably within a range from 100:5 to 100:50, and more preferably from 100:10 to 100:40. The combined amount of (D1) and (D2) may be the same as the amount of the extender pigment (D) described above. In those cases where a combination of (D1) and (D2) is used as the extender pigment (D), adjustment of the viscosity of the ink becomes easier, meaning the fluidity and misting resistance can be more easily improved. Further, the flexibility of the printed coating film also improves, and as a result, it is thought that the curability can be more easily improved.

### 1-5. Other Components (Amine-Based Compound (E))

In those cases where the energy ray-curable lithographic printing ink is irradiated with ultraviolet rays to cure the ink, only the photopolymerization initiator (C) need be added to the ink, but in order to further enhance the curability, an amine-based compound (E) may be used as a photosensitizer in combination with the photopolymerization initiator. From this type of viewpoint, in one embodiment, the energy ray-curable lithographic printing ink preferably contains an amine-based compound (E) in addition to the components (A) to (D) described above.

Examples of amine-based compounds (E) that can be used as photosensitizers include amines such as triethanolamine, methyldiethanolamine, dimethylethanolamine, triisopropanolamine, ethyl 4-(dimethylamino)benzoate, ethylhexyl 4-dimethylaminobenzoate, aminobenzoate derivative polymers, methyl 4-dimethylaminobenzoate, ethyl 4-dimethylaminobenzoate, isoamyl 4-dimethylaminobenzoate, (2-dimethylamino)ethyl benzoate, (n-butoxy)ethyl 4-dimethylaminobenzoate, and 2-ethylhexyl 4-dimethylaminobenzoate.

In one embodiment, in those cases where ultraviolet rays are used as the active energy rays, the blend amount of the photopolymerization initiator (C), relative to the total mass of the active energy ray-curable lithographic printing ink, is preferably within a range from 0.01 to 15% by mass, and more preferably from 0.05 to 10% by mass. When this blend amount is at least 0.01% by mass, satisfactory progression of the curing reaction can be more easily ensured. Further, when the blend amount is not more than 15% by mass, polymerization reactions caused by heat can be better suppressed, and the stability of the active energy ray-curable lithographic printing ink can be more easily maintained in a favorable state.

### (Photopolymerization Inhibitor)

In one embodiment, the active energy ray-curable lithographic printing ink may also contain a photopolymerization inhibitor in addition to the components described above. In this type of embodiment, the photopolymerization inhibitor may be added and used via typical methods. In those cases where a photopolymerization inhibitor is added to the ink, from the viewpoint of not inhibiting the curability, the blend amount of the photopolymerization inhibitor is preferably not more than 3% by mass relative to the total mass of the active energy ray-curable lithographic printing ink. In one embodiment, the photopolymerization inhibitor is preferably used in an amount within a range from 0.01 to 1% by mass relative to the total mass of the ink.

Specific examples of photopolymerization inhibitors that can be used include (alkyl)phenols, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldoxime, methyl ethyl ketoxime, and cyclohexanone oxime. Although not a particular limitation, in one embodiment, the use of one or more compounds selected from the group consisting of hydroquinone, p-methoxyphenol, t-butylhydroquinone, p-benzoquinone and 2,5-di-tert-butyl-p-benzoquinone is preferred.

### (Colored Pigment)

In one embodiment, the active energy ray-curable lithographic printing ink may be an overcoat varnish or clear ink containing no colored pigments. In another embodiment, the active energy ray-curable lithographic printing ink may be a color ink containing a colored pigment. The colored pigment may be any of the variety of known pigments having coloring power, and both inorganic pigments and organic pigments may be used. Examples of colored pigments that may be used to form color inks are listed below.

Specific examples of inorganic pigments include chrome yellow, zinc yellow, Prussian blue, cadmium red, titanium oxide, zinc white, red iron oxide, ultramarine blue, carbon black, graphite and aluminum powder.

Specific examples of the organic pigments include soluble azo pigments such as β-naphthol-based pigments, β-oxynaphthoic acid-based pigments, β-oxynaphthoic acid **anilide-based** pigments, acetoacetic acid **anilide-based** pigments and pyrazolone-based pigments,
insoluble azo pigments such as β-naphthol-based pigments, β-oxynaphthoic acid **anilide-based** pigments, acetoacetic acid **anilide-based** monoazo pigments, acetoacetic acid **anilide-based** disazo pigments, and pyrazolone-based pigments,
phthalocyanine-based pigments such as copper phthalocyanine blue, halogenated (chlorinated or brominated) copper phthalocyanine blue, sulfonated copper phthalocyanine blue and metal-free phthalocyanine, and
polycyclic pigments and heterocyclic pigments such as quinacridone-based pigments, dioxazine-based pigments, threne-based pigments (such as pyranthrone, anthanthrone, indanthrone, anthrapyrimidine, flavanthrone, thioindigo-based pigments, anthraquinone-based pigments, perinone-based pigments and perylene-based pigments), isoindolinone-based pigments, metal complex-based pigments and quinophthalone-based pigments.

In those cases where the active energy ray-curable lithographic printing ink is a color ink, the amount of the colored pigment is preferably at least 5% by mass relative to the total mass of the ink. On the other hand, the amount of the colored pigment is preferably not more than 30% by mass. In one embodiment, the amount of the colored pigment is preferably within a range from 5 to 30% by mass, and more preferably from 5 to 25% by mass.

### (Various Additives)

The active energy ray-curable lithographic printing ink may also contain various additives such as abrasion resistance agents, blocking inhibitors and slipping agents, depending on the intended purpose. These additives can be added to the ink using typical methods. When adding any of the various additives to the ink, the blend amount of the additive is preferably adjusted so as not to impair the effects of the other ink components. In one embodiment, the blend amount of each of the various additives is preferably not more than 15% by mass relative to the total mass of the active energy ray-curable lithographic printing ink.

In one embodiment, the active energy ray-curable lithographic printing ink may contain 10 to 40% by mass of the rosin-modified resin (A), 40 to 70% by mass of the active energy ray-curable compound (B), 0.1 to 10% by mass of the extender pigment (D), and 1 to 10% by mass of the photopolymerization initiator (C) (provided the total mass of the amounts of the various components is 100% by mass).

In another embodiment, the active energy ray-curable lithographic printing ink may contain 10 to 30% by mass of the rosin-modified resin (A), 40 to 70% by mass of the active energy ray-curable compound (B) , 0.1 to 10% by mass of the extender pigment (D), 5 to 30% by mass of a colored pigment, and 1 to 10% by mass of the photopolymerization initiator (C) (provided the total mass of the amounts of the various components is 100% by mass).

The active energy ray-curable lithographic printing ink can be produced by flushing, kneading and mixing the various components described above under temperature conditions within a range from normal temperature to 120°C. When producing the ink, the use of any of various devices such as a kneader, triple roll mill, attritor, sand mill or gate mixer is preferred. In the production of the ink, the rosin-modified resin (A) may be added without modification as a stand-alone component, or may be added in the form of a varnish for an active energy ray-curable lithographic printing ink that contains the rosin-modified resin (A).

### 2. Printed Matter

One embodiment relates to printed matter having a printed layer formed from the active energy ray-curable lithographic printing ink of an embodiment described above.

There are no particular limitations on the substrate to which the ink is applied. Specific examples of substrates that can be used include uncoated papers such as high-quality papers, coated papers including finely coated papers, art papers, coated papers, lightweight coated papers and cast coated papers, paperboard such as white paperboard and cardboard, as well as synthetic papers, aluminum-deposited papers, and plastic sheets of polypropylene, polyethylene, polyethylene terephthalate and polyvinyl chloride.

There are no particular limitations on the printing method used to form the printed layer of the active energy ray-curable lithographic printing ink. In one embodiment, the active energy ray-curable lithographic printed ink can typically be used favorably in lithographic offset printing using dampening water. However, the ink is not limited to use in this type of embodiment, and can also be used favorably in waterless lithographic printing that does not use dampening water.

Formation of the printed layer is achieved by irradiating the coated layer obtained by any of various printing methods with active energy rays to cure the coated layer. **In** this description, the term "active energy rays" means ionizing radiation typified by ultraviolet rays, electron beams, X-rays, α-rays, β-rays and γ-rays, as well as microwaves and high-frequency waves. However, the active energy rays are not limited to the above examples, and any energy source capable of generating radical active species may be used, including visible light rays, infrared rays and laser light rays.

Examples of sources for generating ultraviolet rays include LEDs, ultra-high pressure mercury lamps, high pressure mercury lamps, medium pressure mercury lamps, low pressure mercury lamps, metal halide lamps, xenon lamps, carbon arc lamps, helium-cadmium lasers, YAG lasers, excimer lasers and argon lasers.

Irradiation of the active energy rays is preferably performed in an inert gas atmosphere of nitrogen gas, but irradiation may also be performed in the open atmosphere. Using an infrared heater to heat the applied layer of the active energy ray-curable lithographic printing ink prior to irradiation with the active energy rays, or using an infrared heater to heat the cured layer of the active energy ray-curable lithographic printing ink following irradiation with the active energy rays is effective in accelerating completion of the curing process.

In one embodiment, the active energy ray-curable lithographic printing ink can be used to produce printed matter for forms, printed matter for various types of books, printed matter for various forms of packaging such as cartons, various plastic printed matter, printed matter for stickers and labels, artwork printed matter, metal printed matter (including artwork printed matter, beverage can printed matter, and printed matter for foodstuffs such as cans), as well as other printed matter such as advertisements, flyers and pamphlets. In another embodiment, the active energy ray-curable lithographic printing ink may also be used as an overcoat varnish for the above types of printed matter.

### EXAMPLES

The present invention is described below in further detail using a series of examples, but the present invention is in no way limited by these examples. In the present description, "parts" indicates parts by mass, and "%" indicates % by mass.

### 1. Preparation of Binder Resins

### 1-1. Preparation of Rosin-Modified Resin (A)

In the preparation of the rosin-modified resins (A) described below, details relating to the component analysis of the rosins (gum rosins) used, the method used for confirming reaction progression, and the quantitative analysis of the reaction products are as described below.

### <Component Analysis of Rosin Acids>

The rosin acids used as raw materials were each analyzed by gas chromatography-mass spectrometry, and the surface area ratio (%) of each peak was determined relative to a value of 100% for the total peak surface area for the entire rosin acid. More specifically, the ratio between the conjugated rosin acid (A1) and the organic monobasic acid (A3) contained in the rosin acid was determined from the ratio between the surface areas of the corresponding peaks.

### <Confirmation of Progression of Diels-Alder Addition Reaction, and Quantification of Produced Addition Reaction Product>

The reaction solution from the Diels-Alder addition reaction was analyzed by gas chromatography-mass spectrometry, and the progress of the reaction was confirmed by the decrease in the detection peaks for the conjugated rosin acid (A1) and the α,β-unsaturated carboxylic acid or acid anhydride thereof (A2) used as raw materials. When no further decrease in the detection peaks was observed, the reaction was halted.

Further, calibration curves were created in advance for the conjugated rosin acid (A1) contained in the rosin acid and the α,β-unsaturated carboxylic acid or acid anhydride thereof (A2), and the residual amount of each component left in the reaction solution was measured by fitting the peak surface area obtained in the above analysis to the prepared calibration curve at reaction completion. By then subtracting the residual amount of each component from the amount of that component used in the reaction, the amounts of the components (A1) and (A2) consumed in the Diels-Alder addition reaction were calculated. Moreover, by then adding these amounts of the components consumed in the Diels-Alder addition reaction, the mass of the compound having the structural unit (a12) obtained in the above addition reaction by adding the α,β-unsaturated carboxylic acid or acid anhydride thereof (A2) to the conjugated rosin acid (A1) was able to be calculated.

The molar quantity of the compound having the structural unit (a12) obtained by adding the α,β-unsaturated carboxylic acid or acid anhydride thereof (A2) to the conjugated rosin acid (A1) was deemed to be the smaller of the two molar quantities of the components consumed in the Diels-Alder addition reaction, each of which was calculated by dividing the previously calculated mass of the component (A1) or component (A2) consumed in the Diels-Alder addition reaction by the molecular weight of that component.

Furthermore, the molecular weight of the compound having the structural unit (a12) obtained in the Diels-Alder addition reaction can be calculated as the sum of the molecular weight of the component (A1) and the molecular weight of the component (A2).

### <Confirmation of Amount of Each Structural Unit in Rosin-Modified Resin (A)>

In a similar manner to the quantification of the above compound having the structural unit (a12) (the Diels-Alder addition reaction product), the reaction solution obtained following the esterification reaction was analyzed by gas chromatography-mass spectrometry, and the peak surface areas for the organic monobasic acid (A3), the polybasic acid or anhydride thereof (A4) and the polyol (A5) were measured. By fitting these amounts to previously created calibration curves for each of these components, the residual amount of each component left in the reaction solution was measured. By then subtracting the residual amount of each component from the amount of that component used in the esterification reaction, the amounts of the various components consumed in the esterification reaction, namely the masses of the structural units (a3), (a4) and (a5) that exist in the rosin-modified resin (A), were able to be calculated.

Furthermore, for the residual components (A1) and (A2) that did not participate in the Diels-Alder addition reaction, a similar method to that described above was used to measure the residual amount of each component in the reaction solution obtained following the esterification reaction. By subtracting this residual amount of each component from the residual amount of the corresponding component (A1) or (A2) left in the reaction solution following the Diels-Alder addition reaction, the amounts of these components consumed in the esterification reaction, namely the masses of the structural units (a1) and (a2) that exist in the rosin-modified resin (A), were able to be calculated.

Moreover, for the compound having the structural unit (a12) obtained by adding the α,β-unsaturated carboxylic acid or acid anhydride thereof (A2) to the conjugated rosin acid (A1), a similar method to that described above was used to measure the amount of the residual component in the reaction solution following the esterification reaction. By subtracting this residual amount from the previously calculated mass of the compound having the structural unit (a12) obtained as a result of the Diels-Alder addition reaction, the amount of the component consumed in the esterification reaction, namely the mass of the structural unit (a12) that exist in the rosin-modified resin (A), was able to be calculated.

Then, by dividing the amount of each component consumed in the esterification reaction by the molecular weight of that component, the molar quantities for the various components consumed in the esterification reaction, namely the molar quantity of the structural unit (a12), and the molar quantity of each of the structural units (a1), (a2), (a3), (a4) and (a5) derived from the various components (monomers), were calculated for the rosin-modified resin (A) obtained following the esterification reaction.

In the preparation of the rosin-modified resins (A) described below, maleic anhydride was used as the α,β-unsaturated carboxylic acid or acid anhydride thereof (A2). Accordingly, in those cases where residual component (A2) remained after the Diels-Alder addition reaction, the rosin-modified resin (A) contained a structural unit (a2) derived from maleic anhydride. Furthermore, in those cases where an excess of maleic anhydride was used, and the polybasic acid or anhydride thereof (A4) was also used, the rosin-modified resin (A) contained both a structural unit (a2) derived from maleic anhydride and a structural unit (a4) derived from the polybasic acid or anhydride thereof (A4).

Details of the various measurements conducted relating to the properties of the resins obtained in the following preparations of the rosin-modified resins (A) are as follows.

### (Weight Average Molecular Weight of Rosin-Modified Resin (A))

The weight average molecular weight (Mw) of the rosin-modified resin (A) was measured using a gel permeation chromatograph (HLC-8320) manufactured by Tosoh Corporation. A calibration curve was prepared using standard polystyrene samples. Further, tetrahydrofuran was used as the eluent, and three TSKgel Super HM-M columns (manufactured by Tosoh Corporation) were used as the columns. Measurement was performed under conditions including a flow rate of 0.6 mL/minute, an injection volume of 10 µL, and a column temperature of 40°C.

### (Measurement of Viscosity of Rosin-Modified Resin (A))

A mixture was prepared by mixing the rosin-modified resin (A), dipentaerythritol hexaacrylate (B1) (product name: Laromer DPHA A-ap, manufactured by BASF Japan Ltd.) and trimethylolpropane triacrylate (product name: MIRAMER M300, manufactured by Miwon Specialty Chemical Co., Ltd.) in a mass ratio of 30:35:35, and the viscosity of the mixture was measured at 25°C. The viscosity measurement was conducted using a viscometer HAAKE RS600 manufactured by EKO Instruments Co., Ltd. equipped with a cone-and-plate sensor, using a measurement method employing the flow curve mode.

### (Acid Value of Rosin-Modified Resin (A))

The acid value of the rosin-modified resin (A) was measured by a neutralization titration method. Specifically, first, 1 g of the rosin-modified resin (A) was dissolved in 20 mL of a solvent prepared by mixing xylene and ethanol in a mass ratio of 2:1. Subsequently, 3 mL of a 3% by mass solution of phenolphthalein was added as an indicator to the prepared solution of the rosin-modified resin (A), and a neutralization titration was then performed with a 0.1 mol/L ethanolic solution of potassium hydroxide. The units for the acid value are mgKOH/g.

### (Preparation of Rosin-Modified Resin 1)

A four-neck flask fitted with a stirrer, a reflux condenser fitted with a water separator, and a thermometer was charged with 25 parts of the gum rosin and 7 parts of maleic anhydride, and by heating the contents to 180°C over a period of one hour while the flask was flushed with nitrogen gas, a reaction mixture was obtained. Next, as described above, gas chromatography-mass spectrometry of the reaction mixture was used to confirm the completion point of the Diels-Alder addition reaction.

Subsequently, 40 parts of tert-butylbenzoic acid, 2 parts of succinic anhydride, 26 parts of neopentyl glycol, and 0.1 parts of p-toluenesulfonic acid monohydrate as a catalyst were added to the above reaction mixture, and a dehydration condensation reaction was conducted at 230°C over a period of 14 hours, thus obtaining a rosin-modified resin 1 (R1).

The various measurements of the resin 1 (R1) were conducted in accordance with the methods described above. As shown in Table 1, the results revealed an acid value of 23 and a polystyrene-equivalent weight average molecular weight (Mw) measured by GPC of 2.5×10⁴. The proportions of the various structural units in the resin 1 (R1), calculated in accordance with the methods described above, were as shown in Table 1.

### (Preparation of Rosin-Modified Resins 2 to 6)

With the exception of altering the formulation of the rosin-modified resin 1 (R1) to each of the respective formulations shown in Table 1, rosin-modified resins 2 to 6 (R2 to R6) were prepared in exactly the same manner as the preparation of the rosin-modified resin 1. Measurements of the various properties of each of the obtained rosin-modified resins were conducted in the same manner as the rosin-modified resin 1. These results are shown in Table 1.

### 1-2. Preparation of Other Binder Resins

### (Preparation of Resin A)

A four-neck flask fitted with a stirrer, a reflux condenser fitted with a water separator, and a thermometer was charged with 40 parts of 1,2,3,6-tetrahydrophthalic anhydride, 55 parts of hydrogenated bisphenol A and 5 parts of pentaerythritol, 0.1 parts of p-toluenesulfonic acid monohydrate were then added as a catalyst while the flask was flushed with nitrogen gas, and a dehydration condensation reaction was conducted at 200°C over a period of 17 hours, thus obtaining a resin A (RA). Measurements of the various properties of the obtained resin A (RA) were conducted in the same manner as the rosin-modified resin 1. These results are shown in Table 1.

### (Resin B)

A sample of DAISO DAP A (a brand name for diallyl phthalate manufactured by Osaka Soda Co., Ltd.) was prepared as a binder resin B (RB), and the acid value, the polystyrene-equivalent weight average molecular weight (Mw) measured by GPC, and the viscosity were measured in the same manner as the rosin-modified resin 1. These results are shown in Table 1.

**[Table 1]**

| | Monomer | | Compound | | | Resin 1 (R1) | Resin 2 (R2) | Resin 3 (R3) | Resin 4 (R4) | Resin 5 (R5) | Resin 6 (R6) | Resin A (RA) | Resin B (RB) | Resin C (RC) | Resin D (RD) | Resin E (RE) | Resin F (RF) |
|---|---|---|---|---|---|---|---|---|---|---|---|---|---|---|---|---|---|
| | | (A2) | Maleic anhydride | | | 7 | 12 | 6 | 5 | 15 | 6.5 | | | | | | 4 |
| | | (A1) | Gum rosin | | Conjugated double bond-containing component | 20 | 24 | 16 | 14 | 40 | 20 | | | | | | 21.1 |
| | | (A3) | | | Other component(s) | 5 | 6 | 4 | 3.5 | 10 | 5 | | | | | | 5.3 |
| | | | Benzoic acid | | | | | | | | | | | | | | 25.1 |
| | | | tert-butylbenzoic acid | | | 40 | 33 | | 41 | | 49 | | | | | | |
| | | (A4) | Succinic anhydride | | | 2 | | | | | | | | | | | |
| | | | 1,2,3,6-tetrahydrophthalic anhydride | | | | | | | | | 40 | | | | | 19.2 |
| Formulation | (A) | | 1,2-cyclohexanedicarboxylic acid | | | | | 29 | | | | | | | | | |
| | | | Phthalic anhydride | | | | | | 16.5 | | | | | | | | |
| | | (A5) | Neopentyl glycol | | | 26 | | | | 35 | | | | | | | |
| | | | Polyethylene glycol | | | | 3 | | | | | | | | | | |
| | | | Hydrogenated bisphenol A | | | | | | | | | 55 | | | | | |
| | | | Pentaerythritol | | | | 8 | | 20 | | 19.5 | 5 | | | | | 17.6 |
| | | | Glycerol | | | | 14 | | | | | | | | | | |
| | | | 1,4-cyclohexanedimethanol | | | | | 45 | | | | | | | | | |
| | | | 4-methoxyphenol | | | | | | | | | | | | | | 0.1 |
| | | | Anilox M310 | | | | | | | | | | | | | | 7.6 |
| | Total amount of resin raw materials | | | | | 100 | 100 | 100 | 100 | 100 | 100 | 100 | - | - | - | - | 100 |
| Catalyst | p-toluenesulfonic acid monohydrate | | | | | 0.1 | 0.1 | 0.1 | 0.1 | 0.1 | 0.1 | 0.1 | - | - | - | - | 0.3 |
| Resin properties | Weight average molecular weight (Mw) | | | | | 2.5×10⁴ | 3.0×10⁴ | 0.45×10⁴ | 2.1×10⁴ | 0.52×10⁴ | 1.9×10⁴ | 1.8×10⁴ | 2.8×10⁴ | 4.5×10⁴ | 5.0×10⁴ | 0.61×10⁴ | 2.5×10⁴ |
| | Acid value | | | | | 23 | 36 | 47 | 29 | 72 | 58 | 38 | 2.1 | 7 | - | - | 21 |
| | Composition | | | Amount of structural unit (a12) | | 26.5 | 31.8 | 21.2 | 18.5 | 53.0 | 26.5 | 0.0 | - | - | - | - | 16.3 |
| | | | | Amount of structural unit (a3) relative to mass 100 of structural unit (a12) | | 169.9 | 122.7 | 18.9 | 240.0 | 18.9 | 203.9 | - | - | - | - | - | 186.1 |
| | | | | Proportion (mol%) of structural units (a2), (a4) | | 3.4 | 5.6 | 54.2 | 32.9 | 3.1 | 0.02 | 0.0 | - | - | - | - | 25.7 |
| | hydroxyl group/carboxyl group ratio | | | | | 1.02 | 1.17 | 1.19 | 0.82 | 1.43 | 1.17 | 1.15 | - | - | - | - | 0.82 |
| | Viscosity | | | | | 23.6 | 34.3 | 27.3 | 20.5 | 18.6 | 42.9 | 89.1 | 83.6 | 91.4 | - | - | 25.3 |

| | | | | | | | | | | | | | | | | | |
|---|---|---|---|---|---|---|---|---|---|---|---|---|---|---|---|---|---|
| Notes: In Table 1, the blend amounts shown for the various monomers used when preparing the rosin-modified resins (A) are all recorded as solid fraction mass values. The proportions and amounts of the structural units shown in Table 1 are values obtained by analyzing the reaction solution by gas chromatography-mass spectrometry, and were calculated on a mass basis and a molar basis respectively in accordance with the methods described above. A summary is provided below. The amount of the structural unit (a12) corresponds with the amount of the compound obtained as a result of the Diels-Alder addition reaction between the component (A1) and the component (A2), measured and calculated using the method described above. The amount of the structural unit (a3) represents a value calculated based on the mass of the structural unit (a12) (which was deemed a mass of 100). The proportion of the structural units (a2) and/or (a4) represents a proportion (mol%) calculated based on the amount of all the structural units other than the structural unit (a5). [0138] In Table 1, the resin A and the resin B represent the resins obtained in the preparation examples described above, whereas the resins C to F are as follows. Resin C: DIANAL BR116-27 (an acrylic resin) manufactured by Mitsubishi Chemical Corporation. Resin D: MIRAMER SC9211 manufactured by Miwon Specialty Chemical Co., Ltd. This resin is a varnish composed of 40 parts by mass of an acrylic acrylate oligomer and 60 parts by mass of hexanediol diacrylate. Resin E: MIRAMER PS2522 manufactured by Miwon Specialty Chemical Co., Ltd. This resin is a varnish composed of 75 parts by mass of a polyester acrylate oligomer and 25 parts by mass of dipropylene glycol diacrylate. | | | | | | | | | | | | | | | | | |

### 2. Preparation of Varnishes for Active Energy Ray-Curable Lithographic Printing Inks (Preparation of Varnish 1)

A four-neck flask fitted with a stirrer, a reflux condenser fitted with a water separator, and a thermometer was charged with the rosin-modified resin 1 (R1) prepared above, dipentaerythritol hexaacrylate (B1) and hydroquinone in accordance with the formulation shown in Table 2, and following mixing, the mixture was heated and melted at 100°C to obtain a vanish 1 (V1).

### (Preparation of Varnishes 2 to 6)

With the exception of altering the formulation of the varnish 1 to each of the respective formulations shown in Table 2, varnishes 2 to 6 (V2 to V6) were obtained in exactly the same manner as the preparation of the varnish 1.

### (Preparation of Varnishes A to D and G)

With the exception of altering the formulation of the varnish 1 to each of the respective formulations shown in Table 2, varnishes A to D and G (VA to VD and VG) were obtained in exactly the same manner as the preparation of the varnish 1.

Varnish E and varnish F (VE and VF) correspond with the components of the resin E and the resin F respectively described above.

**[Table 2]**

| | | | | Varnish 1 (V1) | Varnish 2 (V2) | Varnish 3 (V3) | Varnish 4 (V4) | Varnish 5 (V5) | Varnish 6 (V6) |
|---|---|---|---|---|---|---|---|---|---|
| Resin Type | | | | Resin 1 (R1) | Resin 2 (R2) | Resin 3 (R3) | Resin 4 (R4) | Resin 5 (R5) | Resin 6 (R6) |
| Formulation amount | (A) | | Resin | 33.0 | 31.0 | 50.0 | 36.0 | 40.0 | 27.0 |
| | (B) | (B1) | Dipentaerythritol hexaacrylate | 66.9 | 68.9 | 44.9 | 63.9 | 55.0 | 58.0 |
| | | (B2) | Trimethylolpropane triacrylate | | | 4.9 | | 4.9 | 14.9 |
| | | | Hexanediol diacrylate | | | | | | |
| | | | Dipropylene glycol diacrylate | | | | | | |
| | Polymerization inhibitor | | Hydroquinone | 0.1 | 0.1 | 0.1 | 0.1 | 0.1 | 0.1 |
| | Total | | | 100 | 100 | 100 | 100 | 100 | 100 |

| | | | | Varnish A (VA) | Varnish B (VB) | Varnish C (VC) | Varnish D (VD) | Varnish E (VE) | Varnish F (VF) | Varnish G (VG) |
|---|---|---|---|---|---|---|---|---|---|---|
| Resin Type | | | | Resin A (RA) | Resin B (RB) | Resin 1 (R1) | Resin C (RC) | Resin D (RD) | Resin E (RE) | Resin F (RF) |
| Formulation amount | (A) | | Resin | 25.0 | 20.0 | 36.0 | 21.0 | 40.0 | 75.0 | 30.0 |
| | (B) | (B1) | Dipentaerythritol hexaacrylate | 32.0 | 35.0 | 33.0 | 30.0 | | | 69.9 |
| | | (B2) | Trimethylolpropane triacrylate | 42.9 | 44.9 | 30.9 | 48.9 | | | |
| | | | Hexanediol diacrylate | | | | | 60.0 | | |
| | | | Dipropylene glycol diacrylate | | | | | | 25.0 | |
| | Polymerization inhibitor | | Hydroquinone | 0.1 | 0.1 | 0.1 | 0.1 | | | 0.1 |
| | Total | | | 100 | 100 | 100 | 100 | 100 | 100 | 100 |

### 3. Preparation of Active Energy Ray-Curable Lithographic Printing Inks

Details of the pigments used in preparing the various inks described below are as follows.

### <Pigments>

Pigment Blue 15:3: product name: LIONOL BLUE FG-7330, manufactured by TOYOCOLOR Co., Ltd.
Pigment Yellow 13: product name: LIONOL YELLOW 1314, manufactured by TOYOCOLOR Co., Ltd.
Pigment Red 57:1: product name: No. 6516 Carmine 6B, manufactured by Daido Chemical Corporation
Carbon Black: product name: SPECIAL BLACK 550, manufactured by Orion Engineered Carbons GmbH

### (Preparation of Example Ink 1)

Fifty parts of the previously prepared varnish (V1), 19 parts of LIONOL BLUE FG-7330 (an indigo pigment manufactured by TOYOCOLOR Co., Ltd.), 3 parts of magnesium carbonate, 15 parts of trimethylolpropane triacrylate, 8.9 parts of ditrimethylolpropane tetraacrylate, 2 parts of 2,4,6-trimethylbenzoyl diphenylphosphine oxide, 2 parts of 1,2-octanedione, 1-[4-(phenylthio)phenyl]-,2-(O-benzoyloxime), and 0.1 parts of hydroquinone were kneaded at 40°C in a triple roll mill to obtain an active energy ray-curable lithographic printing ink 1 (C1).

The viscosity of the ink 1 (C1) at 25°C was measured. The viscosity measurement was conducted using a viscometer HAAKE RS600 manufactured by EKO Instruments Co., Ltd. equipped with a cone-and-plate sensor, using a measurement method employing the flow curve mode. As shown in Table 3, the result revealed a viscosity of 60 Pa·s.

### (Preparation of Example Inks 2 to 25)

With the exception of altering the formulation of the ink 1 (C1) to each of the respective formulations shown in Table 3, inks 2 to 22 (C2 to C22), an ink 23 (Y1), an ink 24 (M1) and an ink 25 (K1) were obtained in exactly the same manner as the ink 1.

The viscosity of each of the obtained inks was measured in the same manner as the ink 1 (C1). These results are shown in Table 3.

### (Preparation of Comparative Example Inks A to M)

With the exception of altering the formulation of the ink 1 (C1) to each of the respective formulations shown in Table 3, inks A to M (CA to CM) were obtained in exactly the same manner as the ink 1.

The viscosity of each of the obtained inks was measured in the same manner as the ink 1 (C1). These results are shown in Table 3.

### 4. Evaluations of Active Energy Ray-Curable Lithographic Printing Inks

Each of the active energy ray-curable lithographic printing inks prepared in the examples and comparative examples was evaluated for printed coating film applicability and printability in accordance with the methods described below.

### <Evaluation of Printed Coating Film Applicability>

Using an RI Tester (a simple color development device manufactured by Mei Seisakusho Co., Ltd.), each of the active energy ray-curable lithographic printing inks obtained in the examples and comparative examples was printed onto Maricoat paper (a coated cardboard manufactured by Hokuetsu Corporation) at a coating amount of 1 g/m². Subsequently, the printed surface was irradiated with ultraviolet rays at 60 m/min using a single 120 W/cm air-cooled metal halide lamp (manufactured by Toshiba Corporation), thus obtaining printed matter.

Further, in order to prepare a sample for evaluating the curability and adhesiveness as described below, printed matter was also obtained by conducting the irradiation of ultraviolet rays at 100 m/min using a 17 W/cm² LED lamp (XP9-I. manufactured by AMS Spectral UV Co., Ltd. instead of the above air-cooled metal halide lamp.

Following ultraviolet ray irradiation, the printed matter was evaluated for curability, solvent resistance, abrasion resistance, blocking resistance and glossiness in accordance with the methods described below. The results of these evaluation are shown in Table 4.

### (Curability)

The curability was evaluated for both the printed matter obtained using the air-cooled metal halide lamp and the printed matter obtained using the LED lamp. The curability was evaluated on a 5-grade scale against the criteria described below, by visually inspecting the state of the printed surface of the printed matter upon rubbing with a cotton cloth. An evaluation of 3 or higher represents a usable level, but an evaluation of 4 or higher is more preferable.
5: no change to the printed surface.
4: no scratches observed on the printed surface, but color detected on cotton cloth.
3: scratches observed on part of the printed surface, but no detachment observed.
2: detachment observed on part (less than 50%) of the printed surface.
1: detachment observed on part (at least 50%) or all of the printed surface.

### (Solvent Resistance)

The solvent resistance was evaluated on a 5-grade scale against the criteria described below, by rubbing a cotton swab that had been dipped in MEK (methyl ethyl ketone) 30 times across the printed surface, and then visually inspecting the state of the printed surface. An evaluation of 3 or higher represents a usable level, but an evaluation of 4 or higher is more preferable.
5: no change to the printed surface.
4: almost no change observed on the printed surface, but slight coloring of the cotton swab.
3: dissolution observed on part of the printed surface, but no detachment observed.
2: detachment observed on part (less than 50%) of the printed surface.
1: detachment observed on part (at least 50%) or all of the printed surface.

### (Abrasion Resistance)

The abrasion resistance was evaluated by testing the printed surface (coating film) of the printed matter in accordance with JIS K5701-1. Specifically, using a Gakushin-type rubbing fastness tester (manufactured by Tester Sangyo Co., Ltd.), 500 back and forth rubbing repetitions across the coating film surface were performed using a high-quality paper as the rubbing paper with a 500 g weight applied. The rubbed surface (coating film surface) was then inspected visually for change, and the abrasion resistance was evaluated on a 5-grade scale against the criteria described below. An evaluation of 3 or higher represents a usable level, but an evaluation of 4 or higher is more preferable.
5: no change in the rubbed surface
4: no scratches observed on the rubbed surface, but some color transfer to the high-quality paper.
3: scratches observed on part of the rubbed surface, but no detachment observed.
2: detachment observed on part (less than 50%) of the rubbed surface.
1: detachment observed on part (at least 50%) or all of the rubbed surface.

### (Blocking Resistance)

Two sheets of printed matter were superimposed with the printed surfaces facing each another, and a load equivalent to a force of 1 kg/cm² was then applied for 24 hours in an environment at 40°C and 80% humidity. After 24 hours, the sheets of printed matter were separated and inspected visually for change to the printed surfaces, with the blocking resistance evaluated on a 5-grade scale against the criteria described below. An evaluation of 3 or higher represents a usable level, but an evaluation of 4 or higher is more preferable.
5: no changes, with no sticking of printed matter.
4: no changes to printed matter, but some sticking, with sound noticeable upon peeling.
3: printed matter sticks together, and some slight transfer to opposing surface, with white paper patches visible.
2: printed matter sticks together, and transfer to opposing surface, with white paper patches visible across entire printed matter.
1: printed matter sticks tightly together, with detachment of printed matter upon peeling.

### (Glossiness)

Using a Prufbau printability tester, each ink was printed onto Pearl Coat paper manufactured by Mitsubishi Paper Mills Ltd. at a uniform density, thus preparing a test sample. Subsequently, a Gloss Meter model GM-26 (manufactured by Murakami Color Research Laboratory Co., Ltd.) was used to measure the 60° gloss value of the test sample. A higher numerical gloss value indicates superior glossiness. Based on the obtained gloss value, the glossiness was evaluated on a 5-grade scale against the criteria described below. An evaluation of 3 or higher represents a usable level, but an evaluation of 4 or higher is more preferable.
5: gloss value of 60 or higher.
4: gloss value of at least 50 but less than 60.
3: gloss value of at least 40 but less than 50.
2: gloss value of at least 30 but less than 40.
1: gloss value of less than 30.

Further, using an RI Tester (a simple color development device manufactured by Mei Seisakusho Co., Ltd.), each of the active energy ray-curable lithographic printing inks obtained in the examples and comparative examples was printed onto a PP film at a coating amount of 1 g/m². Subsequently, the printed surface was irradiated with ultraviolet rays at 60 m/min using a single 120 W/cm air-cooled metal halide lamp (manufactured by Toshiba Corporation), thus obtaining printed matter. Printed matter were also obtained using the same method as above, but using a PET film instead of the PP film.

The adhesiveness of each of the printed matter samples obtained using the air-cooled metal halide lamp and the LED lamp was evaluated in the manner described below. The evaluation results are shown in Table 4.

### (Adhesiveness)

For each of the printed matter samples on PP film and PET film obtained in the manner described above, the adhesiveness was evaluated by performing a cellophane peel test. The surface of the printed matter following the test was inspected visually, and the adhesiveness was evaluated on a 5-grade scale against the criteria described below. An evaluation of 3 or higher represents a usable level, but an evaluation of 4 or higher is more preferable.
5: no change in the printed surface
4: peeling observed on part (less than 10%) of the printed surface.
3: peeling observed on part (less than 25%) of the printed surface.
2: peeling observed on part (at least 25% but less than 50%) of the printed surface.
1: peeling observed on part (at least 50%) or all of the printed surface.

### <Evaluation of Printability>

Using each of the active energy ray-curable lithographic printing inks obtained in the examples and comparative examples, a printing test was performed by printing 20,000 copies using the ink. The printing test was conducted by using a LITHRONE 226 (a sheet-fed printing press, manufactured by Komori Corporation) to print to Mitsubishi special art paper having a weight of 90 kg/ream (manufactured by Mitsubishi Paper Mills Ltd.) under conditions including a printing speed of 10,000 copies/hour.

Furthermore, in the printing test, tap water containing 1.5% of Astro Mark III Clear (manufactured by Toyo Ink SC Holdings Co., Ltd.) and 3% of isopropyl alcohol was used as the dampening water. In order to enable comparison of the printed state near the boundaries of the range of conditions under which normal printing can be performed, printing was performed at a water dial value 2% higher than the water tolerance lower limit. Here, the "water tolerance lower limit" means the minimum dampening water supply volume at which normal printing can be performed, and the "water dial" means the dial provided on the printing press for adjusting the supply volume of dampening water.

The printed matter samples obtained in the printing test were compared for the state of the solid printed areas, but no marked differences were observed between the printed matter prepared using the inks 1 to 20 of the examples and the inks A to I of the comparative examples.

Furthermore, in the printing test described above, based on the number of waste sheets generated at the start of printing until density fluctuations stabilized, the initial density stability was evaluated on a 5-grade scale against the criteria described below. An evaluation of 3 or higher represents a usable level, but an evaluation of 4 or higher is more preferable. The evaluation results are shown in Table 4.

### (Evaluation Criteria for Initial Density Stability)

5: number of waste sheets of 100 or fewer.
4: number of waste sheets of at least 101 but not more than 200.
3: number of waste sheets of at least 201 but not more than 500.
2: number of waste sheets of at least 501 but not more than 800.
1: number of waste sheets of 801 or more.

### (Scumming Resistance)

In the above printing test, as the number of printed copies increases, ink gradually adheres to the roller used for supplying the dampening water. Further, as the supply volume of dampening water is reduced, ink becomes more likely to adhere to the non-printed area (the area to which ink should not adhere) that constitutes part of the image formation on the printed matter. As a result of these factors, scumming of the printed matter becomes more likely as the number of printed copies increases. Resistance to this type of scumming was evaluated by conducting printing in the same manner as the printing test described above, with the water dial set to a water dial value 2% higher than the water tolerance lower limit, and the printed matter was then inspected visually, with the scumming resistance evaluated on a 5-grade scale against the criteria described below. An evaluation of 3 or higher represents a usable level, but an evaluation of 4 or higher is more preferable.
5: no particular scumming could be confirmed after printing 20,000 copies.
4: slight scumming visible at the paper edges during printing of 20,000 copies, but scumming eliminated by increasing water dial.
3: water dial increased during printing of 20,000 copies, but slight scumming visible at the paper edges.
2: before printing 20,000 copies, scumming could not be eliminated without cleaning ink adhered to the roller.
1: before printing 20,000 copies, scumming could not be eliminated without cleaning ink adhered to the roller multiple times.

### (Misting Resistance)

A white sheet of paper was affixed to the inside of the safety cover of the printing press during the above printing test, and 10,000 copies were printed. The white sheet of paper was then removed, the degree of ink scattering was inspected visually, and the misting resistance was evaluated on a 5-grade scale against the criteria described below. An evaluation of 3 or higher represents a usable level, but an evaluation of 4 or higher is more preferable.
5: almost no ink mist detected on the white sheet of paper.
4: a small amount of ink mist scattered on a portion of the white sheet of paper.
3: a thin layer of ink mist scattered across the entire white sheet of paper.
2: a fairly thick layer of ink mist scattered across the entire white sheet of paper.
1: a thick layer of ink mist scattered across the entire white sheet of paper.

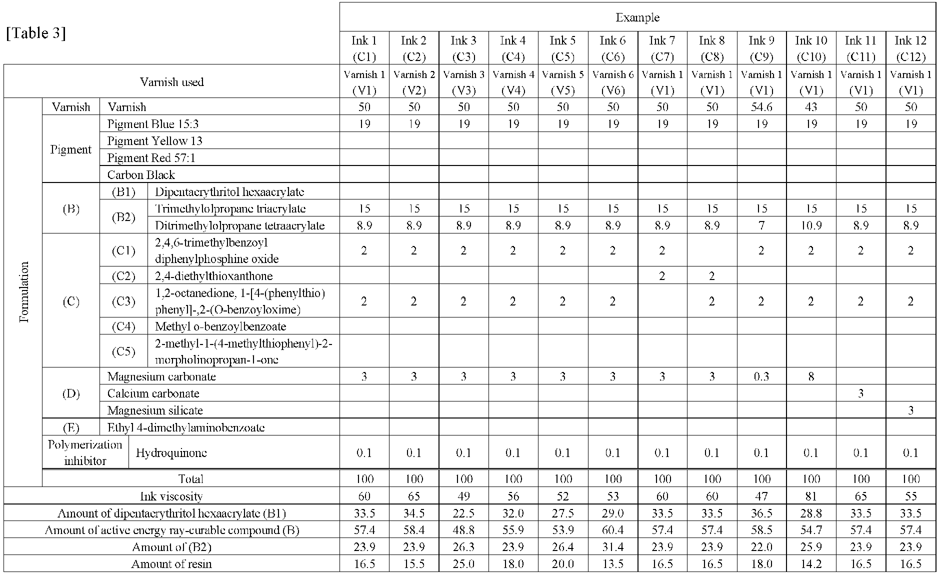

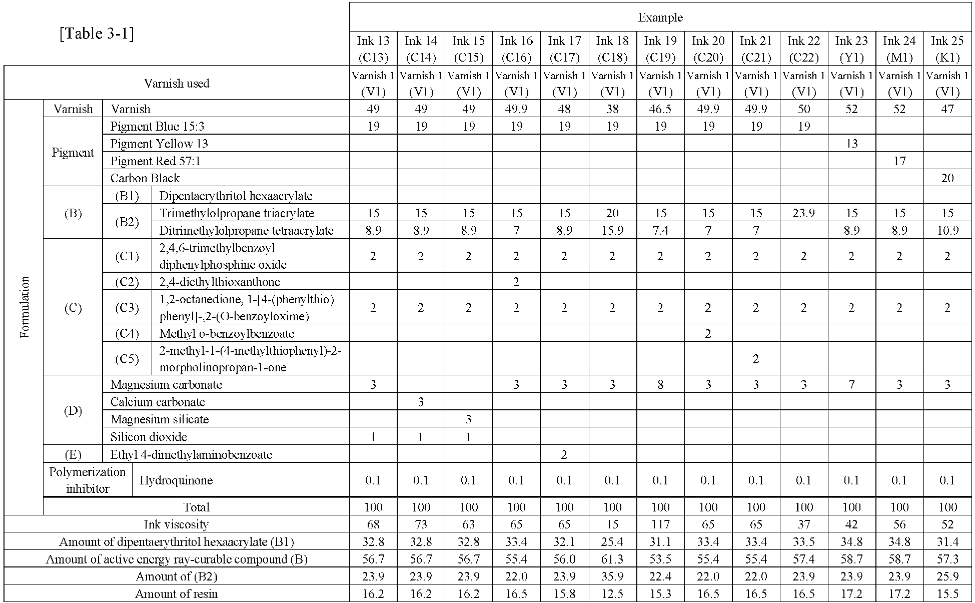

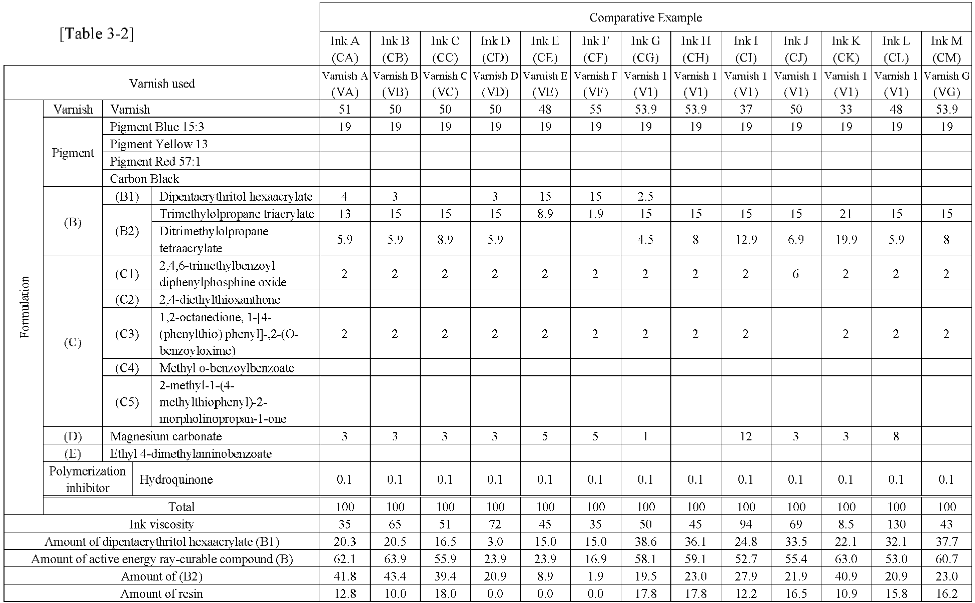

**[Table 4]**

| | Example | | | | | | | | | | | |
|---|---|---|---|---|---|---|---|---|---|---|---|---|
| | Ink 1 (C1) | Ink 2 (C2) | Ink 3 (C3) | Ink 4 (C4) | Ink 5 (C5) | Ink 6 (C6) | Ink 7 (C7) | Ink 8 (C2) | Ink 9 (C9) | Ink 10 (C10) | Ink 11 (C11) | Ink 12 (C12) |
| Curability (metal halide) | 4 | 4 | 3 | 4 | 3 | 4 | 4 | 4 | 4 | 4 | 4 | 4 |
| Curability (LED) | 5 | 5 | 4 | 5 | 4 | 4 | 5 | 5 | 5 | 5 | 5 | 5 |
| MEK resistance | 5 | 5 | 3 | 4 | 3 | 4 | 5 | 5 | 5 | 4 | 5 | 5 |
| Abrasion resistance | 4 | 5 | 4 | 4 | 4 | 4 | 4 | 4 | 5 | 4 | 4 | 4 |
| Blocking resistance | 5 | 5 | 4 | 4 | 4 | 3 | 5 | 5 | 4 | 4 | 4 | 4 |
| Gloss value | 4 | 5 | 5 | 5 | 5 | 3 | 4 | 4 | 5 | 3 | 4 | 4 |
| Adhesiveness (metal halide) | 4 | 4 | 5 | 4 | 5 | 4 | 4 | 4 | 4 | 3 | 4 | 4 |
| Adhesiveness (LED) | 3 | 3 | 5 | 4 | 4 | 3 | 3 | 3 | 3 | 3 | 3 | 3 |
| Misting resistance | 4 | 4 | 4 | 4 | 4 | 4 | 4 | 4 | 3 | 5 | 5 | 4 |
| Scumming resistance | 5 | 5 | 4 | 5 | 4 | 4 | 5 | 5 | 5 | 4 | 5 | 4 |
| Initial density stability | 4 | 4 | 5 | 4 | 5 | 3 | 4 | 4 | 4 | 3 | 4 | 4 |

| | Example | | | | | | | | | | | | |
|---|---|---|---|---|---|---|---|---|---|---|---|---|---|
| | Ink 13 (C13) | Ink 14 (C14) | Ink 15 (C15) | Ink 16 (C16) | Ink 17 (C17) | Ink 18 (C18) | Ink 19 (C19) | Ink 20 (C20) | Ink 21 (C21) | Ink 22 (C22) | Ink 23 (Y1) | Ink 24 (M1) | Ink 25 (K1) |
| Curability (metal halide) | 4 | 4 | 4 | 5 | 5 | 4 | 4 | 4 | 3 | 4 | 4 | 4 | 4 |
| Curability (LED) | 5 | 5 | 5 | 5 | 5 | 5 | 4 | 5 | 4 | 5 | 5 | 5 | 5 |
| MEK resistance | 5 | 5 | 5 | 5 | 5 | 5 | 5 | 5 | 3 | 4 | 5 | 5 | 4 |
| Abrasion resistance | 4 | 4 | 4 | 5 | 4 | 5 | 5 | 5 | 4 | 4 | 5 | 5 | 5 |
| Blocking resistance | 5 | 4 | 4 | 5 | 5 | 4 | 4 | 5 | 4 | 4 | 5 | 4 | 4 |
| Gloss value | 3 | 3 | 3 | 3 | 4 | 3 | 4 | 4 | 5 | 4 | 5 | 5 | 5 |
| Adhesiveness (metal halide) | 4 | 4 | 4 | 4 | 4 | 4 | 3 | 4 | 4 | 4 | 4 | 4 | 3 |
| Adhesiveness (LED) | 3 | 3 | 3 | 3 | 3 | 3 | 3 | 3 | 4 | 4 | 3 | 3 | 3 |
| Misting resistance | 5 | 5 | 5 | 4 | 4 | 4 | 4 | 4 | 4 | 3 | 4 | 4 | 4 |
| Scumming resistance | 5 | 5 | 5 | 4 | 4 | 5 | 5 | 5 | 4 | 4 | 4 | 4 | 4 |
| Initial density stability | 5 | 5 | 5 | 3 | 4 | 4 | 4 | 4 | 4 | 4 | 5 | 4 | 5 |

**[Table 4 continued]**

| | Comparative Example | | | | | | | | | | | | |
|---|---|---|---|---|---|---|---|---|---|---|---|---|---|
| | Ink A (CA) | Ink B (CB) | Ink C (CC) | Ink D (CD) | Ink E (CE) | Ink F (CF) | Ink G (CG) | Ink H (CH) | Ink I (CI) | Ink J (CJ) | Ink K (CK) | Ink L (CL) | Ink M (CM) |
| Curability (metal halide) | 1 | 2 | 1 | 3 | 2 | 2 | 4 | 4 | 3 | 3 | 2 | 3 | 4 |
| Curability (LED) | 2 | 3 | 2 | 4 | 3 | 2 | 5 | 5 | 4 | 4 | 3 | 3 | 5 |
| MEK resistance | 1 | 2 | 1 | 2 | 3 | 2 | 5 | 4 | 3 | 3 | 2 | 3 | 4 |
| Abrasion resistance | 2 | 2 | 2 | 2 | 2 | 2 | 3 | 3 | 3 | 3 | 2 | 3 | 3 |
| Blocking resistance | 3 | 4 | 2 | 2 | 3 | 2 | 4 | 3 | 3 | 2 | 3 | 3 | 3 |
| Gloss value | 3 | 2 | 4 | 1 | 2 | 2 | 4 | 5 | 2 | 3 | 4 | 2 | 3 |
| Adhesiveness (metal halide) | 2 | 2 | 4 | 2 | 4 | 3 | 2 | 3 | 3 | 2 | 3 | 3 | 2 |
| Adhesiveness (LED) | 2 | 1 | 3 | 1 | 3 | 3 | 2 | 2 | 2 | 2 | 3 | 3 | 1 |
| Misting resistance | 1 | 2 | 3 | 1 | 2 | 3 | 1 | 1 | 4 | 3 | 2 | 5 | 2 |
| Scumming resistance | 3 | 3 | 3 | 1 | 1 | 2 | 2 | 1 | 2 | 3 | 1 | 2 | 3 |
| Initial density stability | 3 | 3 | 3 | 1 | 1 | 1 | 3 | 3 | 1 | 3 | 1 | 1 | 2 |

As shown in Table 4, the inks 1 to 25 of the examples that correspond with embodiments of the present invention exhibited usable levels for all of the evaluations, and it was evident that the inks had excellent printability and were able to form coating films having excellent printed coating film applicability and printed coating film strength. In contrast, in the case of the inks A to L of the comparative examples, for example, the curability and/or the adhesiveness were inferior, and at least one of the printability, printed coating film applicability and printed coating film strength did not reach a usable level.

More specifically, as is evident upon comparison with the inks A to F of the comparative examples which used typical lithographic printing ink binder resins, the inks 1 to 25 of the examples that correspond with embodiments of the present invention exhibited markedly lower viscosity values for the rosin-modified resin (A). As a result, in the inks of the examples, the blend amount of the dipentaerythritol hexaacrylate (DPHA) (B 1) was able to be increased significantly.

Usually, increasing the blend amount of the dipentaerythritol hexaacrylate (B1) in an ink increases the likelihood of a deterioration in the flexibility of the printed coating film, meaning curing shrinkage of the printed coating film becomes more likely, and other problems such as a deterioration in the adhesiveness are more likely to occur. However, as is evident from a comparison of the inks 1 to 25 of the examples and, for example, the inks C to F of the comparative examples, in the present invention, by using a prescribed amount of DPHA (B1) and a prescribed amount of the extender pigment (D), the printability, printed coating film applicability and printed coating film strength were able to be improved with good balance. In contrast, in the inks C to F of the comparative examples, the blend amount of DPHA (B1) was less than the prescribed range, whereas in inks G and M of the comparative examples, the blend amount of DPHA exceeded the prescribed range. Further, the inks H and M of the comparative examples did not contain the extender pigment (D), and the ink I of the comparative example had a blend amount of the extender pigment (D) that exceeded the prescribed range. The ink M corresponds with an embodiment that uses the resin disclosed in Patent Document 3 (Example 1 of JP 2016-190907 A), and contains no extender pigment. The ink M, although exhibiting excellent curability, displayed inferior results for the printability and printed coating film applicability, including the adhesiveness, misting resistance and initial density stability. The adhesiveness was particularly poor, and it was evident that using a prescribed amount of the extender pigment in the inks of the examples enabled a significant improvement in the adhesiveness.

Furthermore, as is evident from a comparison of the inks 1, 7 and 8 of the examples with the ink J of the comparative example, using a combination of two or more specified types of photopolymerization initiator (C) facilitated the improvement in curability. Moreover, as is clear from the inks K and L of the comparative examples, adjusting the viscosity of the ink to a value within the prescribed range facilitates improvements in the printed coating film applicability and printed coating film strength, while maintaining excellent printability.

Further, in general, as the blend amount of binder resin in an ink is increased, the curability tends to be prone to deterioration. However, as is evident, for example, by comparison of the inks 1 to 6 of the examples with the inks B, D and C of the comparative examples, by using the rosin-modified resin (A) as a binder resin, excellent curability can be achieved regardless of whether the blend amount of binder resin is large. Moreover, it is also evident that by incorporating a large amount of polycyclic structures derived from the raw material rosin acid, the pigment dispersibility can be improved, and excellent glossiness can be achieved in the printed matter.

## Claims

1. An active energy ray-curable lithographic printing ink comprising a rosin-modified resin (A), an active energy ray-curable compound (B), a photopolymerization initiator (C), and an extender pigment (D), wherein
the rosin-modified resin (A) has a structural unit (a12) derived from a compound obtained by addition of an α,β-unsaturated carboxylic acid or acid anhydride thereof (A2) to a conjugated rosin acid (A1), a structural unit (a3) derived from an organic monobasic acid (A3) excluding the conjugated rosin acid (A1), and a structural unit (a5) derived from a polyol (A5), wherein a mass ratio between the structural unit (a12) and the structural unit (a3) is within a range from 100:10 to 100:350,
the active energy ray-curable compound (B) includes dipentaerythritol hexaacrylate (B 1), and a polyfunctional acrylate (B2) having three or more acryloyl groups per molecule (but excluding dipentaerythritol hexaacrylate (B1)),
the polyfunctional acrylate (B2) contains at least one compound selected from the group consisting of trimethylolpropane triacrylate, trimethylolpropane ethylene oxide adduct (3 to 30 mol) triacrylate, trimethylolpropane propylene oxide adduct (3 to 30 mol) triacrylate, ditrimethylolpropane tetraacrylate, ditrimethylolpropane ethylene oxide adduct (4 to 40 mol) tetraacrylate, and ditrimethylolpropane propylene oxide adduct (4 to 40 mol) tetraacrylate,
an amount of the dipentaerythritol hexaacrylate (B 1) relative to a total mass of the active energy ray-curable lithographic printing ink is within a range from 20 to 37% by mass, and
an amount of the polyfunctional acrylate (B2) relative to a total mass of the active energy ray-curable lithographic printing ink is within a range from 5 to 40% by mass,
the photopolymerization initiator (C) includes at least two types of compounds selected from the group consisting of acylphosphine oxide-based compounds (C1), thioxanthone-based compounds (C2), and oxime ester-based compounds (C3),
the extender pigment (D) includes at least one compound selected from the group consisting of calcium carbonate, magnesium carbonate, magnesium silicate and silicon dioxide, an amount of the extender pigment (D) relative to a total mass of the active energy ray-curable lithographic printing ink is within a range from 0.3 to 8 % by mass, and
a viscosity of the ink at 25°C is within a range from 10 to 120 Pa·s, wherein the viscosity is determined as specified in the description.

2. The active energy ray-curable lithographic printing ink according to Claim 1, wherein the extender pigment (D) is a combination of: (D1) at least one compound selected from the group consisting of calcium carbonate, magnesium carbonate and magnesium silicate; and (D2) silicon dioxide.

3. The active energy ray-curable lithographic printing ink according to any one of Claims 1 or 2, wherein the photopolymerization initiator (C) also includes at least one compound selected from the group consisting of benzophenone-based compounds (C4) and alkylphenone-based compounds (C5).

4. The active energy ray-curable lithographic printing ink according to any one of Claims 1 to 3, further comprising an amine-based compound (E).

5. The active energy ray-curable lithographic printing ink according to any one of Claims 1 to 4, wherein the rosin-modified resin (A), when prepared as a mixture containing the rosin-modified resin (A), the dipentaerythritol hexaacrylate (B1) and trimethylolpropane triacrylate in a mass ratio of 30:35:35, has a viscosity at 25°C within a range from 10 to 50 Pa·s.

6. The active energy ray-curable lithographic printing ink according to any one of Claims 1 to 5, wherein an acid value of the rosin-modified resin (A) is within a range from 10 to 150 mgKOH/g.

7. The active energy ray-curable lithographic printing ink according to any one of Claims 1 to 6, wherein the active energy ray-curable lithographic printing ink is a color ink and further comprises a colored pigment, an amount of the colored pigment relative to a total mass of the active energy ray-curable lithographic printing ink is within a range from 5 to 30% by mass.

8. The active energy ray-curable lithographic printing ink according to Claim 7, wherein the colored pigment contains an organic pigment.

9. The active energy ray-curable lithographic printing ink according to Claim 1, wherein the extender pigment (D) includes at least one compound selected from the group consisting of magnesium carbonate, magnesium silicate and silicon dioxide.

10. Printed matter having a printed layer formed using the active energy ray-curable lithographic printing ink according to any one of Claims 1 to 9.

## Patentansprüche

1. Aktivenergiestrahlenhärtbare lithografische Druckfarbe, umfassend ein kolophoniummodifiziertes Harz (A), eine aktivenergiestrahlenhärtbare Verbindung (B), einen Photopolymerisationsinitiator (C) und ein Füllpigment (D), wobei
das kolophonium-modifizierte Harz (A) eine Struktureinheit (a12), die von einer durch Addition einer α,β-ungesättigten Carbonsäure oder eines Säureanhydrids davon (A2) an eine konjugierte Kolophoniumsäure (A1) erhaltenen Verbindung abgeleitet ist, eine Struktureinheit (a3), die von einer organischen einbasischen Säure (A3) mit Ausnahme der konjugierten Kolophoniumsäure (A1) abgeleitet ist, und eine Struktureinheit (a5), die von einem Polyol (A5) abgeleitet ist, aufweist, wobei ein Massenverhältnis zwischen der Struktureinheit (a12) und der Struktureinheit (a3) in einem Bereich von 100:10 bis 100:350 liegt,
die aktivenergiestrahlenhärtbare Verbindung (B) Dipentaerythrithexaacrylat (B1) und ein polyfunktionelles Acrylat (B2) mit drei oder mehr Acryloylgruppen pro Molekül (jedoch mit Ausnahme von Dipentaerythrithexaacrylat (B1)) umfasst,
das polyfunktionelle Acrylat (B2) mindestens eine Verbindung enthält, ausgewählt aus der Gruppe bestehend aus Trimethylolpropantriacrylat, Trimethylolpropan-Ethylenoxid-Addukt-(3 bis 30 mol)-Triacrylat, Trimethylolpropan-Propylenoxid-Addukt-(3 bis 30 mol)-Triacrylat, Ditrimethylolpropan-Tetraacrylat, Ditrimethylolpropan-Ethylenoxid-Addukt-(4 bis 40 mol)-Tetraacrylat und Ditrimethylolpropan-Propylenoxid-Addukt-(4 bis 40 mol)-Tetraacrylat,
eine Menge des Dipentaerythrithexaacrylats (B1) relativ zur Gesamtmasse der aktivenergiestrahlenhärtbaren lithografischen Druckfarbe in einem Bereich von 20 bis 37 Massen-% liegt und
eine Menge des polyfunktionellen Acrylats (B2) relativ zur Gesamtmasse der aktivenergiestrahlenhärtbaren lithografischen Druckfarbe in einem Bereich von 5 bis 40 Massen-% liegt,
der Photopolymerisationsinitiator (C) mindestens zwei Arten von Verbindungen umfasst, ausgewählt aus der Gruppe bestehend aus Acylphosphinoxid-basierten Verbindungen (C1), Thioxanthon-basierten Verbindungen (C2) und Oximester-basierten Verbindungen (C3),
das Füllpigment (D) mindestens eine Verbindung enthält, ausgewählt aus der Gruppe bestehend aus Calciumcarbonat, Magnesiumcarbonat, Magnesiumsilikat und Siliciumdioxid, eine Menge des Füllpigments (D) relativ zur Gesamtmasse der aktivenergiestrahlenhärtbaren lithografischen Druckfarbe in einem Bereich von 0,3 bis 8 Massen-% liegt, und
eine Viskosität der Druckfarbe bei 25 °C in einem Bereich von 10 bis 120 Pa·s liegt, wobei die Viskosität wie in der Beschreibung angegeben bestimmt wird.

2. Aktivenergiestrahlenhärtbare lithografische Druckfarbe nach Anspruch 1,
wobei das Füllpigment (D) eine Kombination aus: (D1) mindestens einer Verbindung, ausgewählt aus der Gruppe bestehend aus Calciumcarbonat, Magnesiumcarbonat und Magnesiumsilikat; und (D2) Siliciumdioxid, ist.

3. Aktivenergiestrahlenhärtbare lithografische Druckfarbe nach einem der Ansprüche 1 oder 2, wobei der Photopolymerisationsinitiator (C) ferner mindestens eine Verbindung umfasst, ausgewählt aus der Gruppe bestehend aus Benzophenon-basierten Verbindungen (C4) und Alkylphenon-basierten Verbindungen (C5).

4. Aktivenergiestrahlenhärtbare lithografische Druckfarbe nach einem der Ansprüche 1 bis 3, ferner umfassend eine aminbasierte Verbindung (E).

5. Aktivenergiestrahlenhärtbare lithografische Druckfarbe nach einem der Ansprüche 1 bis 4, wobei das kolophonium-modifizierte Harz (A), wenn es als ein Gemisch hergestellt wird, das das kolophonium-modifizierte Harz (A), das Dipentaerythrithexaacrylat (B1) und Trimethylolpropantriacrylat in einem Massenverhältnis von 30:35:35 enthält, bei 25 °C eine Viskosität in einem Bereich von 10 bis 50 Pa·s aufweist.

6. Aktivenergiestrahlenhärtbare lithografische Druckfarbe nach einem der Ansprüche 1 bis 5, wobei eine Säurezahl des kolophonium-modifizierten Harzes (A) in einem Bereich von 10 bis 150 mgKOH/g liegt.

7. Aktivenergiestrahlenhärtbare lithografische Druckfarbe nach einem der Ansprüche 1 bis 6, wobei die aktivenergiestrahlenhärtbare lithografische Druckfarbe eine Farbdruckfarbe ist und ferner ein Farbpigment umfasst, wobei eine Menge des Farbpigments relativ zur Gesamtmasse der aktivenergiestrahlenhärtbaren lithografischen Druckfarbe in einem Bereich von 5 bis 30 Massen-% liegt.

8. Aktivenergiestrahlenhärtbare lithografische Druckfarbe nach Anspruch 7,
wobei das Farbpigment ein organisches Pigment enthält.

9. Aktivenergiestrahlenhärtbare lithografische Druckfarbe nach Anspruch 1,
wobei das Füllpigment (D) mindestens eine Verbindung enthält, ausgewählt aus der Gruppe bestehend aus Magnesiumcarbonat, Magnesiumsilikat und Siliciumdioxid.

10. Druckerzeugnis mit einer unter Verwendung der aktivenergiestrahlenhärtbaren lithografischen Druckfarbe nach einem der Ansprüche 1 bis 9 gebildeten Druckschicht.

## Revendications

1. Encre d'impression lithographique durcissable par rayonnement d'énergie active, comprenant une résine modifiée à la colophane (A), un composé durcissable par rayonnement d'énergie active (B), un amorceur de photopolymérisation (C) et un pigment de charge (D), et dans laquelle :
la résine modifiée à la colophane (A) présente un motif structural (a12) dérivé d'un composé obtenu par addition d'un acide carboxylique α,β-insaturé ou d'un anhydride d'acide de celui-ci (A2) à un acide de colophane conjugué (A1), un motif structural (a3) dérivé d'un acide organique monobasique (A3) à l'exclusion de l'acide de colophane conjugué (A1), et un motif structural (a5) dérivé d'un polyol (A5), le rapport massique entre le motif structural (a12) et le motif structural (a3) se situant dans une plage de 100:10 à 100:350,
le composé durcissable par rayonnement d'énergie active (B) comprend l'hexaacrylate de dipentaérythritol (B1) et un acrylate polyfonctionnel (B2) présentant au moins trois groupes acryloyle par molécule (à l'exclusion toutefois de l'hexaacrylate de dipentaérythritol (B1)),
l'acrylate polyfonctionnel (B2) contient au moins un composé choisi dans le groupe constitué par le triacrylate de triméthylolpropane, un triacrylate d'adduit d'oxyde d'éthylène et de triméthylolpropane (3 à 30 mol), un triacrylate d'adduit d'oxyde de propylène et de triméthylolpropane (3 à 30 mol), un tétraacrylate de ditriméthylolpropane, un tétraacrylate d'adduit d'oxyde d'éthylène et de ditriméthylolpropane (4 à 40 mol) et un tétraacrylate d'adduit d'oxyde de propylène et de ditriméthylolpropane (4 à 40 mol),
la quantité d'hexaacrylate de dipentaérythritol (B1), par rapport à la masse totale de l'encre d'impression lithographique durcissable par rayonnement d'énergie active, se situe dans une plage de 20 à 37 % en masse, et
la quantité d'acrylate polyfonctionnel (B2), par rapport à la masse totale de l'encre d'impression lithographique durcissable par rayonnement d'énergie active, se situe dans une plage de 5 à 40 % en masse,
l'amorceur de photopolymérisation (C) comprend au moins deux types de composés choisis dans le groupe constitué par les composés à base d'oxyde d'acylphosphine (C1), les composés à base de thioxanthone (C2) et les composés à base d'ester d'oxime (C3),
le pigment de charge (D) comprend au moins un composé choisi dans le groupe constitué par le carbonate de calcium, le carbonate de magnésium, le silicate de magnésium et le dioxyde de silicium, la quantité de pigment de charge (D) par rapport à la masse totale de l'encre d'impression lithographique durcissable par rayonnement d'énergie active se situe dans une plage de 0,3 à 8 % en masse, et
la viscosité de l'encre à 25 °C se situe dans une plage de 10 à 120 Pa·s, la viscosité étant déterminée de la manière décrite dans la description.

2. Encre d'impression lithographique durcissable par rayonnement d'énergie active selon la revendication 1, dans laquelle le pigment de charge (D) est une combinaison de : (D1) au moins un composé choisi dans le groupe constitué par le carbonate de calcium, le carbonate de magnésium et le silicate de magnésium, et (D2) de dioxyde de silicium.

3. Encre d'impression lithographique durcissable par rayonnement d'énergie active selon l'une quelconque des revendications 1 et 2, dans laquelle l'amorceur de photopolymérisation (C) comprend également au moins un composé choisi dans le groupe constitué par les composés à base de benzophénone (C4) et les composés à base d'alkylphénone (C5).

4. Encre d'impression lithographique durcissable par rayonnement d'énergie active selon l'une quelconque des revendications 1 à 3, comprenant en outre un composé à base d'amine (E).

5. Encre d'impression lithographique durcissable par rayonnement d'énergie active selon l'une quelconque des revendications 1 à 4, dans laquelle la résine modifiée à la colophane (A), lorsqu'elle est préparée sous forme d'un mélange contenant la résine modifiée à la colophane (A), l'hexaacrylate de dipentaérythritol (B1) et le triacrylate de triméthylolpropane dans un rapport massique de 30:35:35, présente une viscosité à 25 °C comprise dans une plage allant de 10 à 50 Pa·s.

6. Encre d'impression lithographique durcissable par rayonnement d'énergie active selon l'une quelconque des revendications 1 à 5, dans laquelle l'indice d'acide de la résine modifiée à la colophane (A) se situe dans une plage de 10 à 150 mg de KOH/g.

7. Encre d'impression lithographique durcissable par rayonnement d'énergie active selon l'une quelconque des revendications 1 à 6, ladite encre d'impression lithographique durcissable par rayonnement d'énergie active étant une encre de couleur et comprenant en outre un pigment coloré, la quantité dudit pigment coloré par rapport à la masse totale de l'encre d'impression lithographique durcissable par rayonnement d'énergie active se situant dans une plage de 5 à 30 % en masse.

8. Encre d'impression lithographique durcissable par rayonnement d'énergie active selon la revendication 7, dans laquelle le pigment coloré contient un pigment organique.

9. Encre d'impression lithographique durcissable par rayonnement d'énergie active selon la revendication 1, dans laquelle le pigment de charge (D) comprend au moins un composé choisi dans le groupe constitué par le carbonate de magnésium, le silicate de magnésium et le dioxyde de silicium.

10. Imprimé présentant une couche imprimée formée à l'aide de l'encre d'impression lithographique durcissable par rayonnement d'énergie active selon l'une quelconque des revendications 1 à 9.
